# EUROPÄISCHE PATENTSCHRIFT

(11) **EP 1 701 144 B1**
(45) Veröffentlichungstag und Bekanntmachung des Hinweises auf die Patenterteilung: **11.01.2012**
(21) Anmeldenummer: 05101845.5
(22) Anmeldetag: 10.03.2005
(51) Int. Cl.: G01G 21/24, G01G 7/02

(54) **Vorrichtung zum Wiegen gleichgearteter Wägegüter**
Device for weighing uniform products
Dispositif pour peser des produits uniformes

(43) Veröffentlichungstag der Anmeldung: 13.09.2006
(73) Patentinhaber: Mettler-Toledo AG, 8606 Greifensee (CH)
(72) Erfinder: Burkhard, Hans-Rudolf, 8492, Wila (CH)

(56) Entgegenhaltungen:
- EP-B1- 1 743 143
- EP-B1- 1 743 144
- EP-B1- 1 774 267
- DE-A1- 10 242 118
- DE-A1- 19 920 494
- DE-U1-202004 011 793
- US-B1- 6 615 638
- PATENT ABSTRACTS OF JAPAN Bd. 1999, Nr. 08, 30. Juni 1999 (1999-06-30) & JP 11 083645 A (KAWATETSU ADVANTEC KK), 26. März 1999 (1999-03-26)

## Beschreibung

Die vorliegende Erfindung bezieht sich auf eine Vorrichtung zum Wiegen gleich gearteter Wägegüter mit einer vorgegebenen Anzahl von Wägemodulen und einer gleichen Anzahl von Lastaufnehmern, wobei jeder Lastaufnehmer durch ein Kraftübertragungsgestänge mit einer Wägezelle verbunden ist und wobei das Kraftübertragungsgestänge durch eine Parallelführung in Lastrichtung geführt wird.

Eine solche Vorrichtung findet bevorzugt in automatisierten Produktions- und Testanlagen ihren Einsatz, wobei für eine Integration in diese Anlagen insbesondere Waagen in modularer Ausführung - so genannte Wägemodule - geeignet sind. Dabei handelt es sich im Wesentlichen um Waagen, bei denen die Anzeigeeinheit von der Waage getrennt angeordnet ist, beispielsweise in einer Anlage mit einer zentralen Anzeige für mehrere Wägemodule. Ein Einsatz von solch integrierten Wägemodulen findet bevorzugt in Anlagen für die Produktion und Überprüfung von kleinen, relativ teueren Teilen statt, beispielsweise in Abfüll- und Verpackungsmaschinen für Tabletten, Kapseln, Ampullen, etc. in der Pharmaindustrie, oder bei der Kontrolle von Kugellagern. Beim Wiegen gleichgearteter Wägegüter oder auch dem so genannten Batch-Wiegen handelt es sich um einen Vorgang bei dem mehrere Lasten individuell zu wiegen sind, sei dies zum Zwecke des Kontrollierens, des Dosierens oder des Abfüllens etc. auf engem Raum.

Da die Wägegüter mittels einer Beschickungsvorrichtung, beispielsweise einem Roboterarm mit Mehrfachgreifer, auf die einzelnen Lastaufnehmer der Wägemodule aufgebracht beziehungsweise nach dem Wägevorgang wieder entfernt werden, müssen die Positionen der einzelnen Lastaufnehmer zueinander und gegenüber der Beschickungseinrichtung genau und dauerhaft positioniert sein.

Derartige Vorrichtungen zum Wiegen gleich gearteter Wägegüter sind im Stand der Technik bekannt. Dabei handelt es sich vorwiegend um Reihen- oder Flächenanordnungen von Wägemodulen. Weitere Anordnungen stellen darauf ab, die Wägemodule in einer Flächenanordnung satellitenartig um eine Reihenanordnung von Lastträgern, welche an die Abstände der Zufuhrelemente einer vorhandenen Beschickungsvorrichtung anzupassen sind, zu platzieren, da häufig das Wägemodul zu gross ist, um entsprechend kleine Abstände einzuhalten.

Eine Reihenanordnung von Wägemodulen offenbaren die DE 102 42 118 A1 und die DE 199 20 494 A1, in welchen in einer Vorrichtung zum Wiegen pharmazeutischer Behältnisse, insbesondere Ampullen, vier Wägemodule in einer Reihe angeordnet sind, wobei die Behältnisse vor und nach dem Befüllen den Wägemodulen mittels einer Greifeinrichtung zugeführt und wieder von diesen entnommen werden.

Eine Flächenanordnung von Wägezellen offenbart die JP0121327 A, welche eine preisgünstige Methode zur Herstellung einer Vielzahl von mit Dehnmessstreifen als Sensor beaufschlagten Wägezellen aus einer Platte aus Federmaterial beschreibt. Diese mit Dehnmessstreifen arbeitenden Wägezellen eignen sich im Gegensatz zu einer nach dem Prinzip der elektromagnetischen Kraftkompensation arbeitenden Wägezelle jedoch nicht für den Anwendungsbereich einer Massebestimmung im Mikrogramm- bis Grammbereich.

In einer nach dem Prinzip der elektromagnetischen Kraftkompensation arbeitenden Wägezelle wird die Kraft, die durch eine Last auf der Waagschale verursacht wird, durch ein Kraftkompensationsglied, das aus einem Permanentmagneten und einer Spule besteht, kompensiert, wobei der durch die Spule fliessende Strom zur Erzeugung der Kompensationskraft gemessen wird. Dieser Messwert ist proportional zur aufgelegten Last. Dieser Messwert ist aber auch abhängig von der Position der Spule im Magnetfeld des Permanentmagneten und deshalb muss die Spule beim Erfassen des Messwertes stets dieselbe Position gegenüber dem Magneten aufweisen. Die Position der Spule nach Aufbringen der Last wird über einen Lagegeber ermittelt und der Strom an der Spule solange erhöht, bis die von der Last verursachte Verschiebung der Spule gegenüber dem Permanentmagneten kompensiert ist. Dabei erfolgt die Messung des Spulenstroms, welcher ein Mass für das Gewicht der aufgelegten Last darstellt. Eine solche Wägezelle wird in CH 638 894 A5 offenbart, wobei die Wägezelle zwischen dem Lastaufnehmer und dem Kraftkompensationsglied eine Kraftübertragungsvorrichtung aufweist, welche die von der Last erzeugte Kraft am Lastaufnehmer an das Kraftkompensationsglied überträgt und je nach Lastbereich unter- oder übersetzt.

Eine nach demselben Prinzip arbeitende Wägezelle wird in CH 593 481 A5 offenbart. In dieser Patentschrift ist der Lastaufnehmer direkt mit dem Kraftkompensationsglied über ein Kraftübertragungsgestänge gekoppelt. Am Kraftübertragungsgestänge ist die bewegliche Seite des Lagegebers angebracht, während die feststehende Seite des Lagegebers mit dem gehäusefesten Bereich der Wägezelle, beziehungsweise mit dem feststehenden Bereich des Kraftkompensationsglieds, starr verbunden ist. Diese als Direktmessprinzip bezeichnete Anordnung wird vorzugsweise im Niederlastbereich eingesetzt. Da der Lagegeber über eine begrenzte Auflösung verfügt, hängt die Präzision der Messung wesentlich von der Auflösung des Lagegebers ab.

Der Lastaufnehmer sowie die Spule der Kraftkompensationsvorrichtung müssen gegenüber dem feststehenden Bereich der Wägezelle präzise geführt werden. Dies geschieht über eine Parallelführung, deren beweglicher Parallelschenkel mit dem Kraftübertragungsgestänge verbunden ist und deren Fixbereich mit dem gehäusefesten Bereich der Wägezelle starr verbunden ist. Der bewegliche Parallelschenkel und der Fixbereich sind durch zwei biegesteife Parallellenker mittels Dünnstellenbiegelager miteinander verbunden. Es können jedoch auch federnde Parallellenker eingesetzt werden, dann entfallen die Dünnstellenbiegelager. Beim Auflegen einer Last auf den Lastaufnehmer verschiebt sich das Kraftübertragungsgestänge in Lastrichtung, was eine Auslenkung der Parallellenker zur Folge hat und die Dünstellenbiegelager oder elastischen Parallellenker biegt. Diese Dünnstellenbiegelager beziehungsweise elastischen Parallellenker verursachen analog einem Blattfederelement ein, der Biegerichtung entgegenwirkendes, proportional zum Auslenkwinkel der Parallellenker erzeugtes Drehmoment beziehungsweise eine der Lastrichtung entgegenwirkende Kraft. Je massiver diese Dünnstellenbiegelager oder elastischen Parallellenker ausgestaltet werden, desto grösser ist die Lastdifferenz, die zur minimal detektierbaren Verschiebung des Lagegebers notwendig ist. Somit beeinflusst die Dimensionierung der Biegelager beziehungsweise der elastischen Parallellenker ebenfalls wesentlich das Auflösungsvermögen der Wägezelle.

Parallelführungen, die durch einen oberen und einen unteren Parallellenker eine Waagschale vertikal führen, weisen vielfach mindestens an zwei der Verbindungsstellen zwischen Parallellenker und Fixbereich Mittel auf, die eine Justierung dieser Verbindungsstellen in einer vorgegebenen Richtung erlaubt. In DE 27 10 788 A1 werden solche lagenverstellbare Verbindungsstellen eines Parallellenkers offenbart, um eine Justierung der Wägemodule auf Ecklastfreiheit zu erlauben.

Nachteilig bei den im Stand der Technik offenbarten Parallelführungen ist, dass die maximal zulässige Beanspruchung des verwendeten Materials einer Verjüngung der Dünnstellenbiegelager Grenzen setzt und die Parallelführung durch die Verjüngung der Biegelager oder der elastischen Parallellenker gegenüber Überlasten sehr empfindlich wird. Um diese Problematik zu entschärfen, können die Parallellenker verlängert werden. Damit wird der Auslenkwinkel an den Biegelagern bei gegebener minimal detektierbarer Verschiebung der Abtastung verringert. Dies ergibt jedoch für Wägemodule, die in einer Vorrichtung zum Wiegen gleichgearteter Wägegüter eingesetzt werden sollen, sehr unvorteilhafte Abmessungen, die zu teuren, voluminösen und komplizierten Vorrichtungen führen.

Aufgabe der vorliegenden Erfindung ist es daher, für eine Vorrichtung zum Wiegen gleichgearteter Wägegüter mit mehreren Wägemodulen eine möglichst hohe Anzahl von Wägemodulen auf einer gegebenen Fläche anzuordnen ohne die Messwertauflösung der geringen Abstände der Module wegen negativ zu beeinflussen.

Gelöst wird diese Aufgabe mit den Merkmalen des Anspruchs 1. Eine Vorrichtung zum Wiegen gleichgearteter Wägegüter weist mindestens ein erstes und ein zweites Wägemodul auf, wobei jedes Wägemodul einen Lastaufnehmer und eine Wägezelle beinhaltet, die durch ein Kraftübertragungsgestänge miteinander verbunden sind. Jede Wägezelle ist in einem Bauraum, dessen Ausdehnung in der Ebenen orthogonal zur Lastrichtung durch die Bauräume angrenzender Wägezellen begrenzt wird angeordnet und mit einer Parallelführung, die mindestens einen beweglichen Parallelschenkel, mindesten zwei Parallellenker und mindestens einen Fixbereich aufweist, versehen. Die Ausdehnung des Bauraums in Lastrichtung ist oberhalb und unterhalb des Wägemoduls nur durch angrenzende Systeme, beispielsweise den Operationsraum einer Beschickungsvorrichtung, bei auf mehreren Ebenen angeordneten Wägemodulen die angrenzende Ebene der Vorrichtung oder die Gehäusewand der Vorrichtung zum Wiegen gleichgearteter Wägegüter begrenzt. Der bewegliche Parallelschenkel einer dem ersten Wägemodul zugeordneten Parallelführung ist mit dem Kraftübertragungsgestänge dieses ersten Wägemoduls verbunden, der Fixbereich dieser Parallelführung ist jedoch ausschliesslich im Bauraum der Wägezelle des zweiten Wägemoduls angeordnet und fixiert. Durch diese Gestaltung der Parallelführung des Kraftübertragungsgestänges entsteht nur eine geringe Rückstellkraft durch die Biegelager und damit eine geringe Beeinträchtigung der Messwertauflösung.

Die nach Art. 54(3) veröffentlichten Dokumente EP 1774267 B1, EP 1743144 B1 und EP 1743143 B1 offenbaren zwei benachbarte Wägezellen, wobei der Fixbereich der Parallelführung nicht ausschliesslich im Bauraum der Wägezelle des zweiten Wägemoduls angeordnet ist.

In diesem Zusammenhang ist der Lastaufnehmer als eine das Wägegut für eine Wägung aufnehmende Vorrichtung jedweder Form zu betrachten, insbesondere ist hier auch eine Lastaufnahme-Plattform, auf welcher auch ein Aufbau befestigt werden kann, oder der Begriff Waagschale eingeschlossen. Ebenso kann auf dem Lastaufnehmer selbst noch ein zusätzlicher Aufbau oder Adapter angebracht sein.

Die einzelnen Wägezellen können direkt mit Befestigungsmitteln verschiedener Art miteinander verbunden werden. Aber auch mittels einer Aufnahmestruktur die die einzelnen Wägemodule aufnimmt, sind die Wägemodule indirekt miteinander starr verbindbar. Als Aufnahmestruktur sind beispielsweise Platten mit entsprechendem Lochbild, Zwischen- oder Distanzstücke, Rahmen und dergleichen verwendbar. Als Lochbild wird eine definierte, geometrische Anordnung von Bohrungen und Aussparungen zueinander in einem Körper, beispielsweise in einer Platte, bezeichnet. Die mit ihrem Fixbereich und gegebenenfalls auch mit den Parallellenkern über den Bauraum der zugeordneten Wägezelle hinausragende Parallelführung kann nun gegenüber anderen Wägemodulen so angeordnet werden, dass der freie Bauraum oberhalb beziehungsweise unterhalb der Wägezellen optimal genutzt wird. Der Fixbereich der einzelnen Parallelführungen ist je nach Gestaltung der Vorrichtung zum Wiegen gleichgearteter Wägegüter mit einem Befestigungsbereich verbunden, welcher direkt an einer weiteren Wägezelle oder an der Aufnahmestruktur ausgebildet ist.

Gattungsgemäss können als Befestigungsmittel zur starren Verbindung der Wägezellen untereinander und zur Verbindung der Fixbereiche mit den Befestigungsbereichen formschlüssige lösbare oder nicht lösbare Verbindungselemente wie Schrauben, Stifte, Nieten, Bolzen und dergleichen verwendet werden, aber auch an den Wägezellen ausgebildete Vorsprünge, Taschen, Laschen Bohrungen und Vertiefungen. Selbst wegbegrenzte Linearführungen und dergleichen sind als Befestigungsmittel beziehungsweise Befestigungsbereiche geeignet. Des Weiteren können die Wägezellen, Parallelführungen und gegebenenfalls die Aufnahmestrukturen durch klemmen, verstemmen, schnappen, schmieden, kleben, löten, schweissen, vergiessen, pressen, aufschrumpfen und dergleichen im Sinne eines Befestigungsmittels miteinander verbunden sein.

Je nach Länge der Parallellenker können auch mehrere Wägezellen überspannt werden, so dass mehrere Wägemodule zwischen einem Fixbereich und dem zugeordneten Wägemodul liegen.

Die Ausrichtung der Parallelführungen nach den sich räumlich erstreckenden Kanten der Wägezellen ist nicht zwingend. Beispielsweise ist gegenüber der Ausrichtung der Wägezellen in der Ebene orthogonal zur Lastrichtung die diagonal verlaufende Anordnung von Parallelführungen in der Ebene orthogonal zur Lastrichtung möglich.

Idealerweise verfügen mindestens zwei Verbindungsstellen zwischen Fixbereich und Parallellenker über Justiervorrichtungen, mit welchen der Abstand der Verbindungsstellen zwischen Parallellenker und Fixbereich zueinander einstellbar ist.

Bezüglich der Ausgestaltung von Parallellenkern stehen mehrere Möglichkeiten offen. Beispielsweise können die Parallellenker federnd ausgestaltet und starr mit dem Fixbereich und mit dem beweglichen Parallelschenkel verbunden sein. Ebenso sind vergleichsweise starre Parallellenker einsetzbar, die über Dünnstellenbiegelager mit dem Fixbereich und mit dem beweglichen Parallelschenkel verbunden sind.

In einer Ausgestaltung sind je zwei obere und je zwei untere Parallellenker einer Parallelführung im Sinne einer V-Anordnung gegen den beweglichen Parallelschenkel hin zusammenlaufend angeordnet.

In einer weiteren Ausgestaltung einer Parallelführung sind ein oberer und ein unterer Parallellenker in den drei Dimensionen parallel zueinander angeordnet. Wenn einer dieser Parallellenker durch mindestens zwei Dünnstellenbiegelager mit dem Fixbereich verbunden ist, ist eine Justierung des Wägemoduls auf Ecklastfreiheit mittels einer Justiervorrichtung, beispielsweise einer Justierschraube, einem Keil und dergleichen möglich.

Die Parallelführungen können aus Einzelteilen bestehend aufgebaut sein, wobei die einzelnen Teile wie Fixbereich, beweglicher Parallelschenkel, Dünstellenbiegelager und Parallellenker durch Befestigungsmittel wie Schrauben, Nieten und dergleichen miteinander verbunden werden.

Vorzugsweise sind die Parallelführungen aus einem einstückigen Materialblock gefertigt, wobei die materialfreien Bereiche durch Bohren und Fräsen, aber auch mittels Funkenerosion erzeugt werden.

In einer Ausführung sind mindestens zwei Wägemodule nebeneinander angeordnet, wobei die Parallelführungen gegeneinander gerichtet sind. Der Fixbereich der Parallelführung des ersten Wägemoduls wird mit dem an der zweiten Wägezelle ausgebildeten Befestigungsbereich starr verbunden und der Fixbereich der Parallelführung des zweiten Wägemoduls mit dem an der ersten Wägezelle ausgebildeten Befestigungsbereich starr verbunden. Dabei können die Parallellenker der beiden Parallelführungen in verschiedenen Ebenen angeordnet sein, so dass sie sich nicht berühren und die Wägergebnisse beeinflusst werden. Selbstverständlich können die Parallelführungen einander in den materialfreien Bereichen durchdringen, so dass die Parallellenker der ersten Parallelführung zwischen den Parallellenkern der zweiten Parallelführung angeordnet sind. Ferner ist auch eine Art Schichtung möglich, indem die oberen Parallellenker der ersten Parallelführung zwischen den Parallelenkern der zweiten Parallelführung durchgeführt werden und die unteren Parallellenker der zweiten Parallelführung zwischen den Parallellenkern der ersten Parallelführung durchgeführt werden.

Eine Zweiergruppierung von Wägemodulen in der vorangehend beschriebenen Art erleichtert auch die Reparatur einer Vorrichtung zum Wiegen gleich gearteter Wägegüter, da immer nur zwei Wägemodule gleichzeitig ausgebaut werden müssen ohne dass an den umliegenden Wägemodulen Teile zu entfernen sind. Diese Zweiergruppierung kann auch dadurch geschehen, dass die Wägezellengehäuse zweier, nebeneinander liegender Wägemodule zusammengefasst einstückig ausgebildet sind.

In einer weiteren Ausführung sind mindestens zwei Wägemodule nebeneinander angeordnet, wobei die Parallelführungen aller Wägemodule eine identische Ausrichtung haben. Dies bedingt, dass der Fixbereich des ersten Wägemoduls an einem Befestigungsbereich der Aufnahmestruktur der Vorrichtung zum Wiegen gleichgearteter Wägegüter fixiert ist oder dass ein leeres Wägezellengehäuse als Befestigungsbereich mit der Wägezelle des ersten Wägemoduls vorgelagert verbunden ist. Diese Ausführung hat den Vorteil, dass alle Parallelführungen in derselben Ebene angeordnet werden können. Die Wägezellengehäuse einer solchen Reihe, in einer Linie zusammengefasst, können einstückig ausgebildet sein. Ebenso möglich ist es, alle Wägezellengehäuse in einer Platte zu vereinigen, so dass alle Wägezellengehäuse aus einer Platte heraus gearbeitet monolithisch miteinander verbunden sind.

In einer bevorzugten Ausführung durchdringen die mit den Lastaufnehmern verbundenen Kraftübertragungsgestänge die Wägezellen. Die oberen Parallellenker sind mit den Kraftübertragungsgestängen der zugeordneten Wägezellen zwischen dem Lastaufnehmer und der Wägezelle verbunden. Die unteren Parallellenker sind auf der dem Lastaufnehmer abgewandten Seite der Wägezellen angeordnet und mit den die Wägezellen durchdringenden, zugeordneten Kraftübertragungsgestängen verbunden.

Selbstverständlich kann das Kraftübertragungsgestänge aber auch seitlich an der Wägezelle vorbeigeführt werden, wobei eine zusätzliche Verbindung, beispielsweise in Form eines Hebels oder einer Koppel zwischen Wägezelle und zugeordnetem Kraftübertragungsgestänge eingeführt werden muss.

Jedes Wägemodul weist seine eigene Parallelführung, ob monolithisch aus einem Materialblock herausgearbeitet oder aus Einzelteilen zusammengestellt, auf.

In einer besonders bevorzugten Ausführung sind die Parallelführungen in einer Platte zusammengefasst, seien es aus Einzelteilen zusammengestellte und mit der Platte verbundene, oder aus der Platte direkt herausgearbeitete Parallelführungen. Die Platte überspannt entweder alle Wägezellen und enthält somit alle Parallelführungen der ganzen Vorrichtung zum Wiegen gleichgearteter Wägegüter, oder die Parallelführungen sind auf mehrere Platten verteilt, die nebeneinander, aber nicht zwingend auf derselben Ebene, orthogonal zur Lastrichtung angeordnet sind. Selbstverständlich müssen die Wägezellen mit der den Fixbereich der Parallelführungen bildenden Platte starr verbunden sein, wobei die beweglichen Parallelschenkel der herausgearbeiteten oder mit der Platte verbundenen Parallelführungen mit den Kraftübertragungsgestängen der zugeordneten Wägezellen verbunden sind.

Eine Weiterbildung dieser Anordnung von Wägezellen und Platten besteht darin, dass alle oberen Parallellenker auf einer oberen Platte und alle unteren Parallellenker auf einer unteren Platte angeordnet sind. Die beweglichen Parallelschenkel der oberen Platte werden mit den Kraftübertragungsgestängen der zugeordneten Wägezellen zwischen Lastaufnehmer und Wägezelle verbunden. Die beweglichen Parallelschenkel der unteren Platte, die auf der den Lastaufnehmern abgewandten Seite der Wägezellen angeordnet ist, sind mit den die Wägezellen durchdringenden zugeordneten Kraftübertragungsgestängen verbunden.

Eine bevorzugte Weiterbildung besteht darin, dass die Wägemodule in mindestens zwei Ebenen übereinander angeordnet sind, in welchen die Wägemodule jeweils eine Reihen und/oder Flächenanordnung bilden. Um die Kraftübertragungsgestänge einer unteren Ebene in geeigneter Weise an den Wägemodulen der oberen Ebene vorbeizuführen, können die Wägemodule einer Ebene gegenüber denjenigen der darunter und/oder darüber liegenden Ebene versetzt angeordnet sein. Jedes Wägemodul weist eine von den anderen Wägemodulen vollständig unabhängige Parallelführung auf.

In einer besonders bevorzugten Weiterbildung sind die Wägemodule in mindestens zwei Ebenen übereinander angeordnet, wobei die Parallelführungen in Platten zusammengefasst sind. Sofern pro Ebene die obern und unteren Parallellenker der Wägemodule in einer oberen und in einer untere Platte zusammengefasst sind, besteht die Möglichkeit, zwischen zwei Ebenen angeordnete Platten zusammenzufassen, so dass die zwischen den Ebenen liegende Platte sowohl Parallelführungen zu den Wägezellen der oberen Ebene als auch Parallelführungen zu den Wägezellen der unteren Ebene aufweist. Die Anzahl der Ebenen, auf welchen die Wägemodule angeordnet sein können, hängt von den Abmessungen der Wägemodule und von der geforderten Anzahl der Lastträger ab, wobei letztere wiederum dadurch beeinflusst ist, wie die Wägegüter den Lastträgern zugeführt werden.

Wenn Wägemodule in einer Anordnung mit mehreren Ebenen mit unterschiedlich langen Kraftübertragungsgestängen versehen sind, zum Beispiel um die Lastaufnehmer in einer Ebene anzuordnen, weisen sie unterschiedliche Vorlasten auf. Diese unterschiedlichen Vorlasten können durch ein Ausgleichsgewicht, beispielsweise eine Schraube bei den Wägemodulen mit kürzerem Kraftübertragungsgestänge, angeglichen werden. Sofern es die Raumverhältnisse zulassen, kann dieses Ausgleichsgewicht beziehungsweise Vorlastkompensationsgewicht im Verbindungsbereich von Kraftübertragungsgestänge und beweglichem Parallelschenkel der Parallelführung angebracht werden.

Einzelheiten der erfindungsgemässen Vorrichtung zum Wiegen gleichgearteter Wägegüter ergeben sich anhand der Beschreibung der in den Zeichnungen dargestellten Ausführungsbeispiele. Es zeigen:
- Fig. 1: eine perspektivische Darstellung einer Vorrichtung mit zwei Wägemodulen deren Parallelführungen gegeneinander gerichtet und übereinander angeordnet sind, sowie schematisch die Bauräume der einzelnen Wägezellen;
- Fig. 2: eine perspektivische Darstellung einer Vorrichtung mit drei Wägemodulen und zwei Wägezellen-Leergehäusen deren Parallelführungen in dieselbe Richtung weisend ineinander angeordnet sind;
- Fig. 3: eine perspektivische Darstellung einer Vorrichtung mit zwei Wägemodulen und den schematisch dargestellten Bauräumen der einzelnen Wägezellen, wobei die Parallelführungen der Wägemodule oberhalb und unterhalb der Wägezellen angeordnet sind;
- Fig. 4: eine perspektivische Darstellung einer Vorrichtung mit sechs Wägemodulen deren Parallelführungen in plattenförmigen Fixbereichverbunden angelenkt sind, wobei diese Fixbereichverbunde zwischen den Lastaufnehmern und den Wägezellen positioniert sind;
- Fig. 5: eine perspektivische Darstellung einer Vorrichtung mit sechs Wägemodulen deren Parallelführungen in plattenförmigen Fixbereichverbunden angelenkt sind, wobei der obere Fixbereichverbund zwischen den Lastaufnehmern und den Wägezellen positioniert ist und der untere Fixbereichverbund auf der den Lastaufnehmern abgewandten Seite der Wägezellen angeordnet ist;
- Fig. 6: eine perspektivische Darstellung einer Vorrichtung mit zwei Ebenen welche je drei Wägemodule und zwei Wägezellen- Leergehäuse aufweisen und deren Parallelführungen in dieselbe Richtung weisend ineinander angeordnet sind;
- Fig. 7: eine perspektivische Darstellung einer Vorrichtung mit zwei Wägemodulen und zwei Wägezellen-Leergehäusen deren Parallelführungen in dieselbe Richtung weisend ineinander angeordnet sind, wobei die Parallelführung eines Wägemoduls den Bauraum einer weiteren Wägezelle vollständig durchdringt.

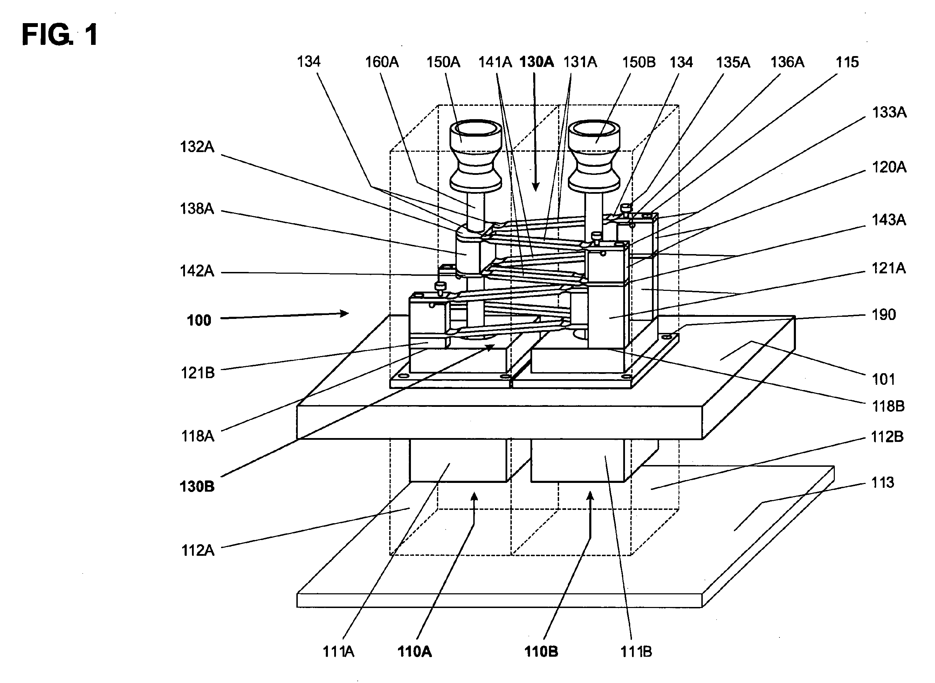

In Figur 1 ist die perspektivische Darstellung einer erfindungsgemässen Vorrichtung zum Wiegen gleichgearteter Wägegüter 100 mit zwei Wägemodulen 110A, 110B mit ihren Wägezellen 111A, 111B und je einem zugeordneten Lastaufnehmer 150A, 150B dargestellt. Jede dieser Wägezellen 111A, 111B ist in einem Bauraum 112A, 112B angeordnet. Die Ausdehnung des jeweiligen Bauraumes in der Ebene orthogonal zur Lastrichtung wird durch die Bauräume benachbarter Wägezellen begrenzt, die Ausdehnung in der Lastrichtung beispielsweise durch einen mit der Aufnahmestruktur fest verbundenen Gehäuseboden 113. Die Begrenzung der Bauräume 112A, 112B entgegen der Lastrichtung bilden beispielsweise die Oberkanten der Lastaufnehmer 150A, 150B, da sich beispielsweise oberhalb der Lastaufnehmer 150A, 150B üblicherweise der Operationsraum einer nicht dargestellten Beschickungsanlage befindet.

Das Wägemodul 110A ist durch Befestigungsmittel 190, beispielsweise Schrauben mit einer Aufnahmestruktur 101 starr verbunden. Die Wägezelle 111A des Wägemoduls 110A weist eine nicht dargestellte, im Innern der Wägezelle 111A angeordnete Spule auf, die mit einem Kraftübertragungsgestänge 160A verbunden ist. Am oberen Ende des Kraftübertragungsgestänges 160A ist der Lastaufnehmer 150A angebracht. Mit dem Kraftübertragungsgestänge 160A ist der bewegliche Parallelschenkel einer Parallelführung 130A verbunden. Diese Parallelführung weist zwei obere Parallellenker 131A und zwei untere Parallellenker 141A auf, die paarweise im Sinne einer V- Anordnung gegen den beweglichen Parallelschenkel der Parallelführung hin zusammenlaufend angeordnet und mit diesem über Dünnstellenbiegelager 134 verbunden sind, wobei der bewegliche Parallelschenkel einen oberen beweglichen Parallelschenkel 132A und einen unteren beweglichen Parallelschenkel 142A beinhaltet, die durch das Distanzstück 138A voneinander beabstandet werden. Der Fixbereich der Parallelführung 130A beinhaltet die oberen Fixbereiche 133A, die durch Dünnstellenbiegelager 134 mit den oberen Parallellenkern 131A verbunden sind, den unteren Fixbereichen 143A, die ebenfalls durch Dünnstellenbiegelager 134 mit den unteren Parallellenkern 141A verbunden sind und den Zwischenstücken 120A, die die oberen Fixbreiche 133A und die unteren Fixbereiche 143A im selben Masse beabstanden wie das Distanzstück 138A. Der Fixbereich der Parallelführung 130A wird durch Schrauben 115 über die Abstandstücke 121A mit der Wägezelle 111B des Wägemoduls 110B starr verbunden. Um die Parallelführung 130A auf Ecklastfreiheit zu justieren, weisen die oberen Fixbereiche 133A nahe den Dünnstellenbiegelagern 134 eine Justiervorrichtung 135A auf die es ermöglicht, die Lage der Dünstellenbiegelager gegenüber dem Fixbereich entgegen der Lastrichtung zu verändern. Um auch eine Justierung in Lastrichtung zu ermöglichen, weisen die Zwischenstücke 120A eine Freistellung 136A im Bereich der Justiervorrichtung 135A auf.

Die Beschreibung des Wägemoduls 110A gilt sinngemäss auch für das Wägemodul 110B und dessen Parallelführung 130B, wobei die Abstandsstücke 121A des Fixbereichs der Parallelführung 130A gegenüber den Abstandstücken 121B der Parallelführung 130B wesentlich höher ausgebildet sind, so dass die Parallelführung 130A oberhalb der Parallelführung 130B angeordnet ist.

Selbstverständlich ist diese Anordnung nicht auf zwei Wägemodule 110A, 110B beschränkt. Es können beliebig viele Wägemodule in einer flächigen Anordnung hinter- und nebeneinander angeordnet werden, wobei jeweils zwei benachbarte Wägezellen in der dargestellten Weise gruppiert sind.

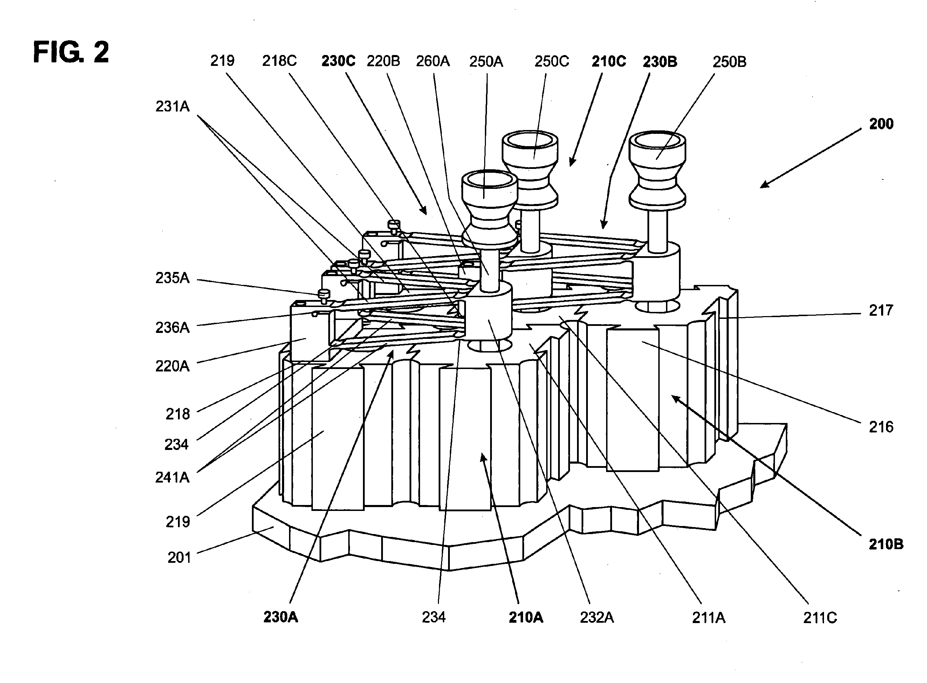

Figur 2 zeigt die perspektivische Darstellung einer erfindungsgemässen Vorrichtung zum Wiegen gleichgearteter Wägegüter 200 mit den Wägemodulen 210A, 210B, 210C mit ihren Wägezellen und den zugeordneten Lastaufnehmern 250A, 250B, 250C sowie den zugeordneten Parallelführungen 230A, 230B, 230C. Jede Wägezelle der Wägemodule 210A, 210B, 210C ist in einem nicht dargestellten Bauraum angeordnet, wobei die Ausdehnung des jeweiligen Bauraumes analog zur Beschreibung der Bauräume in Figur 1 begrenzt ist. Den Wägemodulen 210A und 210C der ersten Reihe vorgelagert sind noch die Wägezellen-Leergehäuse 219, die lediglich über die Befestigungsbereiche 218 die Parallelführungen 230A und 230C mit einer Aufnahmestruktur 201 starr verbinden.

Das Wägemodul 210A ist durch nicht dargestellte Befestigungsmittel, beispielsweise Schrauben mit der Aufnahmestruktur 201 starr verbunden und weist eine Wägezelle 211A auf, deren nicht dargestellte, im Innern angeordnete Spule mit einem Kraftübertragungsgestänge 260A verbunden ist. Am oberen Ende des Kraftübertragungsgestänges 260A ist der Lastaufnehmer 250A angebracht. Mit dem Kraftübertragungsgestänge 260A ist der bewegliche Parallelschenkel 232A einer, aus einem Materialblock herausgearbeiteten Parallelführung 230A verbunden. Diese Parallelführung 230A weist zwei obere Parallellenker 231A und zwei untere Parallellenker 241A auf, die paarweise im Sinne einer V- Anordnung gegen den beweglichen Parallelschenkel 232A hin zusammenlaufend angeordnet und mit diesem über Dünnstellenbiegelager 234 verbunden sind. Der Fixbereich 220A der Parallelführung 230A ist ebenfalls über Dünnstellenbiegelager 234 mit den oberen Parallellenkern 231A, beziehungsweise mit den unteren Parallellenkern 241A verbunden und ist am Befestigungsbereich 218 des Wägezellen-Leergehäuses 219 starr fixiert.

Um die Parallelführung 230A auf Ecklastfreiheit zu justieren, weist der Fixbereich 220A nahe den Dünnstellenbiegelagern 234 Justiervorrichtungen 235A auf die es ermöglichen, die Lage der Dünstellenbiegelager 234 gegenüber dem Fixbereich 220A entgegen der Lastrichtung zu verändern. Um auch eine Justierung in Lastrichtung zu ermöglichen, weist der Fixbereich 220A zwei Freistellungen 236A im Bereich der Justiervorrichtung 235A auf.

Die Beschreibung des Wägemoduls 210A gilt sinngemäss auch für das Wägemodul 210C beziehungsweise 210B wobei der Fixbereich 220B mit dem, an der Wägezelle 211C ausgebildeten Befestigungsbereich 218C starr verbunden ist.

Selbstverständlich ist diese Anordnung nicht auf drei Wägemodule 210A, 210B, 210C beschränkt. Es können beliebig viele Wägemodule in einer flächigen Anordnung in der dargestellten Weise hinter- und nebeneinander angeordnet werden. Sofern die Positionierung der Wägemodule untereinander sichergestellt werden muss damit deren Lastaufnehmer mit einer Beschickungsvorrichtung korrespondieren, können an den Wägezellen Positionierungsmittel, beispielsweise mit in Lastrichtung weisende Linearführungsleisten 216 und Linearführungsnuten 217 ausgebildet sein, wobei jeweils die Linearführungsleiste 216 einer Wägezelle in die Linearführungsnut 217 der benachbarten Wägezelle eingreift.

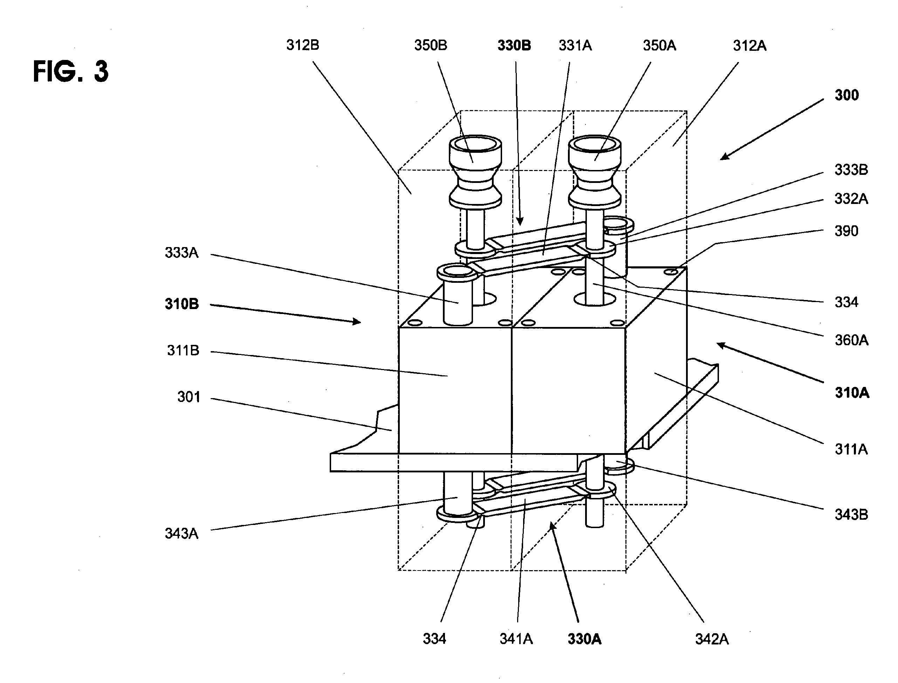

In Figur 3 ist die perspektivische Darstellung einer erfindungsgemässen Vorrichtung zum Wiegen gleichgearteter Wägegüter 300 mit zwei Wägemodulen 310A, 310B, mit ihren Wägezellen 311A, 311B und mit je einem zugeordneten Lastaufnehmer 350A, 350B dargestellt. Jede dieser Wägezellen 311A, 311B ist in einem Bauraum 312A, 312B angeordnet. Die Ausdehnung des jeweiligen Bauraumes in der Ebene orthogonal zur Lastrichtung wird durch die Bauräume benachbarter Wägezellen begrenzt, die Ausdehnung in der Lastrichtung beispielsweise durch einen mit der Aufnahmestruktur fest verbundenen, nicht dargestellten Gehäuseboden. Die Begrenzung der Bauräume 312A, 312B entgegen der Lastrichtung bilden beispielsweise die Oberkanten der Lastaufnehmer 350A, 350B, da sich oberhalb der Lastaufnehmer 150A, 150B üblicherweise der Operationsraum einer nicht dargestellten Beschickungsanlage befindet.

Das Wägemodul 310A ist durch Befestigungsmittel 390, beispielsweise Schrauben mit einer Aufnahmestruktur 301 starr verbunden. Die Wägezelle 311A des Wägemoduls 310A weist eine nicht dargestellte, im Innern der Wägezelle 311A angeordnete Spule auf, die mit einem Kraftübertragungsgestänge 360A verbunden ist, welches die Wägezelle 311A in Lastrichtung durchdringt. Am oberen Ende des Kraftübertragungsgestänges 360A ist der Lastaufnehmer 350A angebracht.

Zwischen dem Lastaufnehmer 350A und der Wägezelle 311A ist ein oberer Parallellenker 331A angeordnet, der mit dem oberen beweglichen Parallelschenkel 332A und dem oberen Fixbereich 333A der Parallelführung 330A über Dünnstellenbiegelager 334 verbunden ist. Desgleichen ist auf der, dem Lastaufnehmer 350A abgewandten Seite der Wägezelle 311A ein unterer Parallellenker 341A angeordnet, der mit dem unteren beweglichen Parallelschenkel 342A und dem unteren Fixbereich 343A der Parallelführung 330A über Dünnstellenbiegelager 334 verbunden ist. Sowohl der untere bewegliche Parallelschenkel 343A als auch der obere bewegliche Parallelschenkel 332A sind mit dem Kraftübertragungsgestänge 360A verbunden. Der obere Fixbereich 333A und der untere Fixbereich 343A sind mit der Wägezelle 311B des Wägemoduls 310B starr verbunden.

Die Beschreibung des Wägemoduls 310A gilt sinngemäss auch für das Wägemodul 310B und dessen Parallelführung 330B, wobei der obere Fixbereich 333B und der untere Fixbereich 343B der Parallelführung 330B mit der Wägezelle 311A des Wägemoduls 310A starr verbunden ist.

Selbstverständlich ist diese Anordnung nicht auf zwei Wägemodule 310A, 310B beschränkt. Es können beliebig viele Wägemodule in einer flächigen Anordnung hinter- und nebeneinander angeordnet werden, wobei wie dargestellt, jeweils zwei benachbarte Wägezellen in der dargestellten Weise gruppiert werden können. Diese Gruppierung ist aber selbstverständlich nicht zwingend, es sind auch weitere Anordnungen möglich.

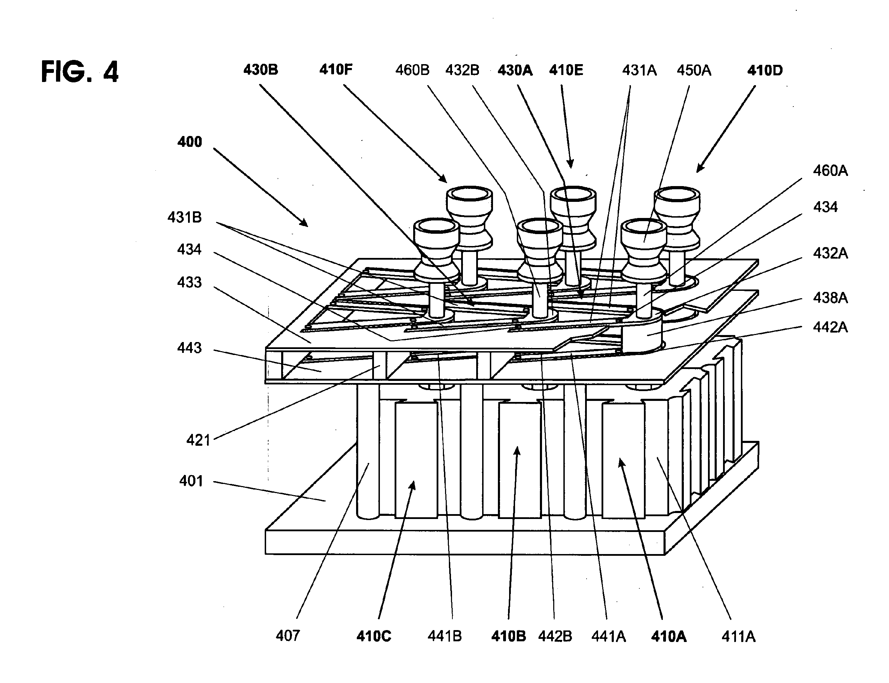

Figur 4 zeigt die perspektivische Darstellung einer erfindungsgemässen Vorrichtung zum Wiegen gleichgearteter Wägegüter 400 mit einer flächigen Anordnung von Wägemodulen 410A, 410B, 410C, 410D, 410E, 410F.

Das Wägemodul 410A ist durch nicht dargestellte Befestigungsmittel, beispielsweise Schrauben mit einer Aufnahmestruktur 401 starr verbunden und weist eine Wägezelle 411A auf, deren nicht dargestellte, im Innern angeordnete Spule mit einem Kraftübertragungsgestänge 460A verbunden ist. Am oberen Ende des Kraftübertragungsgestänges 460A ist der Lastaufnehmer 450A angebracht. Mit dem Kraftübertragungsgestänge 460A ist der obere bewegliche Parallelschenkel 432A verbunden. Zwei obere Parallellenker 431A sind paarweise im Sinne einer V- Anordnung gegen den oberen beweglichen Parallelschenkel 432A hin zusammenlaufend angeordnet und mit diesem über Dünnstellenbiegelager 434 verbunden. Die Parallellenker 431A und der mit ihm verbundene obere bewegliche Parallelschenkel 432A sind mit dem oberen Fixbereichverbund 433 über Dünnstellenbiegelager 434 verbunden.

Die analog dem Wägemodul A ausgebildeten und beschriebenen oberen Parallellenker beispielsweise 431A, 431B oberen beweglichen Parallelschenkel beispielsweise 432A sowie die Dünnstellenbiegelager 434 aller Wägemodule 410A, 410B, 410C, 410D, 410E, 410F sind aus einer einstückigen Platte herausgearbeitet, wobei die materialfreien Bereiche durch Fräsen, Bohren, Stanzen, Laserschnitt- oder Wasserstrahlschneidverfahren, mittels Funkenerosion und dergleichen erzeugt werden können. Dadurch weisen alle Parallelführungen denselben oberen Fixbereichverbund 433 auf und sind gattungsgemäss untereinander verbunden.

Eine vollkommen identisch gefertigte zweite Platte stellt den unteren Fixbereichverbund 443 dar, wobei die unteren beweglichen Parallelschenkel, beispielsweise 442A, 442B durch die unteren Parallellenker 441A, 441B mit dem Fixbereichverbund 443 verbundenen sind. Die Position der aus der Platte herausgearbeiteten unteren beweglichen Parallelschenkel, beispielsweise 442A, 442B muss mit den zugeordneten oberen beweglichen Parallelschenkel, beispielsweise 432A, 432B in Verbindung mit den Kraftübertragungsgestängen 460A, 460B genau übereinstimmen damit sie die Parallelführungen 430A, 430B bilden. Der obere Fixbereichverbund 433 und der untere Fixbereichverbund 443 sind durch Abstandstücke 421 miteinander starr verbunden. Die beiden miteinander verbundenen Fixbereichverbunde 433, 443 sind über die Stützen 407 an der Aufnahmestruktur 401 starr fixiert. Die Abstandstücke 421 weisen im Bereich der Parallellenker und der beweglichen Parallelschenkel Aussparungen auf, damit sie die Bewegungsfreiheit der Parallelführung nicht einschränken. Selbstverständlich können die Abstandstücke 421 in diesem Bereich auch ganz unterbrochen sein. Funktionswichtig ist lediglich die Abstützung und präzise Beabstandung der Dünnstellenbiegelager 434 des oberen Fixbereichverbundes 433 gegenüber den Dünnstellenbiegelagern 434 des unteren Fixbereichverbundes 443.

Beim Wägemodul 410A sind der obere bewegliche Parallelschenkel 432A und der untere bewegliche Parallelschenkel 442A mit dem Kraftübertragungsgestänge 460A des Wägemoduls 410A verbunden, wobei das Distanzstück 438A die beweglichen Parallelschenkel 432A und 442A in gleichem Abstand wie der obere Fixbereichverbund 433 zum unteren Fixbereichverbund 443 beabstandet.

Wie für Wägemodul 410A dargestellt, sind alle Kraftübertragungsgestänge der Wägemodule 410A, 410B, 410C, 410D, 410E, 410F mit den ihnen zugeordneten beweglichen Parallelschenkeln entsprechend verbunden.

Selbstverständlich ist diese Anordnung nicht auf sechs Wägemodule 410A, 410B, 410C, 410D, 410E, 410F beschränkt. Es können beliebig viele Wägemodule in einer flächigen Anordnung hinter- und nebeneinander angeordnet werden, wobei der obere Fixbereichverbund 433 und der untere Fixbereichverbund 443 der Anzahl Wägezellen angepasst werden muss.

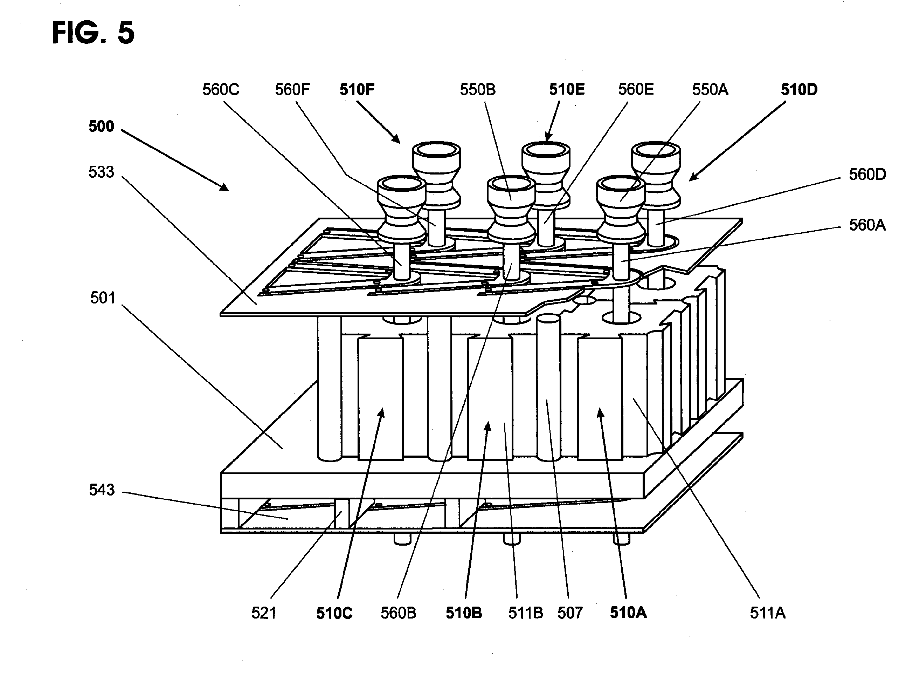

Figur 5 zeigt die perspektivische Darstellung einer erfindungsgemässen Vorrichtung zum Wiegen gleichgearteter Wägegüter 500 mit einer flächigen Anordnung von Wägemodulen 510A, 510B, 510C, 510D, 510E, 510F, welche mit einer Aufnahmestruktur 501 starr verbunden sind. Diese Vorrichtung zum Wiegen gleichgearteter Wägegüter 500 entspricht weitgehend der in Figur 4 beschriebenen Vorrichtung und weist einen oberen Fixbereichverbund 533 und einen unteren Fixbereichverbund 543 auf. Jedes Wägemodul 510A, 510B weist ebenfalls eine Wägezelle 511A, 511B mit zugeordnetem Lastaufnehmer 550A, 550B auf. Anders als bei Figur 4 ist der untere Fixbereichverbund 543 auf der den Wägemodulen abgewandten Seite der Aufnahmestruktur 501 starr über Abstandstücke 521 mit der Aufnahmestruktur verbunden. Der obere Fixbereichverbund 533 ist über Stützen 507 an der Aufnahmestruktur starr fixiert. Die Kraftübertragungsgestänge wie beispielsweise 560A, 560B durchdringen ihre zugeordneten Wägezellen 511A, 511B und die Aufnahmestruktur in Lastrichtung. Die den Wägemodulen 510A, 510B, 510C, 510D, 510E, 510F zugeordneten oberen beweglichen Parallelschenkel und unteren beweglichen Parallelschenkel sind mit den jeweiligen Kraftübertragungsgestängen 560A, 560B, 560C, 560D, 560E, 560F verbunden.

Selbstverständlich ist diese Anordnung nicht auf sechs Wägemodule 510A, 510B, 510C, 510D, 510E, 510F beschränkt. Es können beliebig viele Wägemodule in einer flächigen Anordnung hinter- und nebeneinander angeordnet werden, wobei der obere Fixbereichverbund 533 und der untere Fixbereichverbund 543 der Anzahl Wägezellen angepasst werden muss.

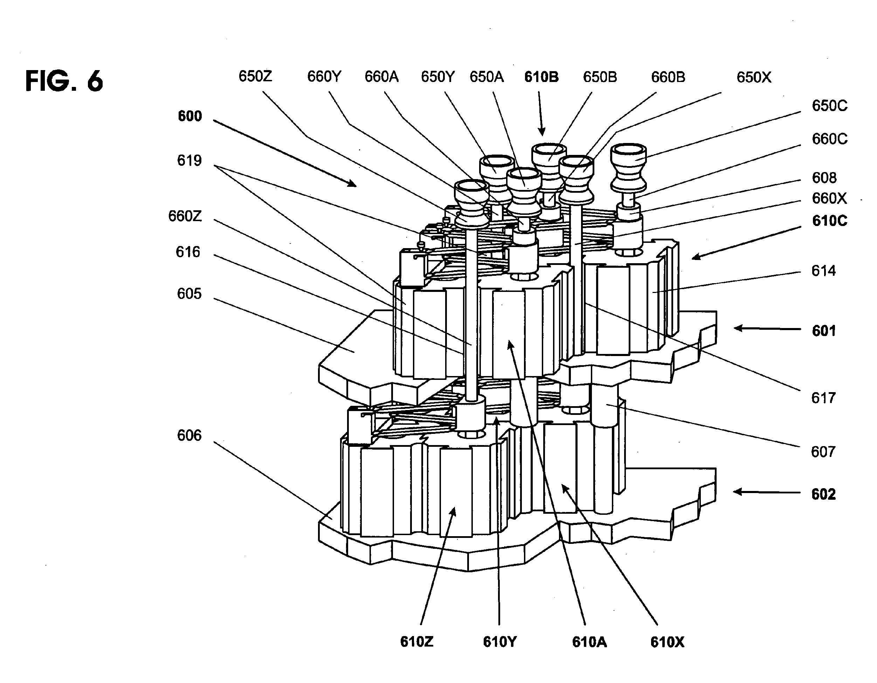

Figur 6 zeigt die perspektivische Darstellung einer erfindungsgemässen Vorrichtung zum Wiegen gleichgearteter Wägegüter 600 mit je auf einer ersten Ebene 601 und auf einer zweiten Ebene 602 angeordneten, flächigen Anordnung von Wägemodulen wie sie vorangehend in Figur 2 beschrieben worden ist. Die Wägemodule 610A, 610B, 610C der oberen Ebene 601 sind auf einer Aufnahmestruktur 605 starr fixiert, die Wägemodule 610X, 610Y, 610Z der unteren Ebene 602 sind auf einer Aufnahmestruktur 606 starr fixiert. Die beiden Aufnahmestrukturen 605, 606 sind über die Stütze 607 miteinander starr verbunden.

Die Ebene 601 ist gegenüber der Ebene 602 versetzt angeordnet, so dass die Kraftübertragungsgestänge 660X, 660Y, 660Z der Wägemodule 610X, 610Y, 610Z der unteren Ebene 602 an den Wägemodulen 610A, 610B, 610C der oberen Ebene 601 vorbeigeführt werden können damit die Lastaufnehmer 650X, 650Y, 650Z auf derselben Ebene orthogonal zur Lastrichtung angeordnet sind wie die Lastaufnehmer 650A, 650B, 650C. Idealerweise besitzen die Wägezellen 611A, 611B, 611C der Wägemodule 610A, 610B, 610C sowie die Wägezellen- Leergehäuse 619 an den Ecken in Lastrichtung verlaufende Längsnuten 614, deren Querschnitt der Grundfläche eines Viertelkreises entspricht, so dass beim Zusammenfügen von vier Wägezellen im Eckbereich 617 derselben, ein Kanal 616 mit kreisrundem Querschnitt entsteht. Durch diese Kanäle können die Kraftübertragungsgestänge 660X, 660Y, 660Z der unteren Ebene 602 durchgeführt werden.

Vorzugsweise weist jede Wägezelle ungeachtet ihrer Anordnung in der oberen Ebene 601 oder in der unteren Ebene 602 dieselben Verhältnisse im Bezug auf die Belastung durch Lastaufnehmer und Kraftübertragungsgestänge, die so genannte Vorlast auf. Da insbesondere die Kraftübertragungsgestänge 660X, 660Y, 660Z wesentlich länger als die Kraftübertragungsgestänge 660A, 660B, 660C ausgestaltet sind und dadurch mehr Masse aufweisen, wird die Vorlastdifferenz zwischen den Wägemodulen der oberen Ebene 601 und der unteren Ebene 602 mit einem Vorlastkompensationsgewicht 608 ausgeglichen, wobei je ein Vorlastkompensationsgewicht 608 am Kraftübertragungsgestänge jedes Wägemoduls 660A, 660B, 660C der oberen Ebene 601 befestigt ist.

Selbstverständlich ist diese Anordnung nicht auf drei Wägemodule 610A, 610B, 610C beziehungsweise 610X, 610Y, 610Z pro Ebene beschränkt. Es können pro Ebene 601, 602 beliebig viele Wägemodule in einer flächigen Anordnung in der dargestellten Weise hinter- und nebeneinander angeordnet werden.

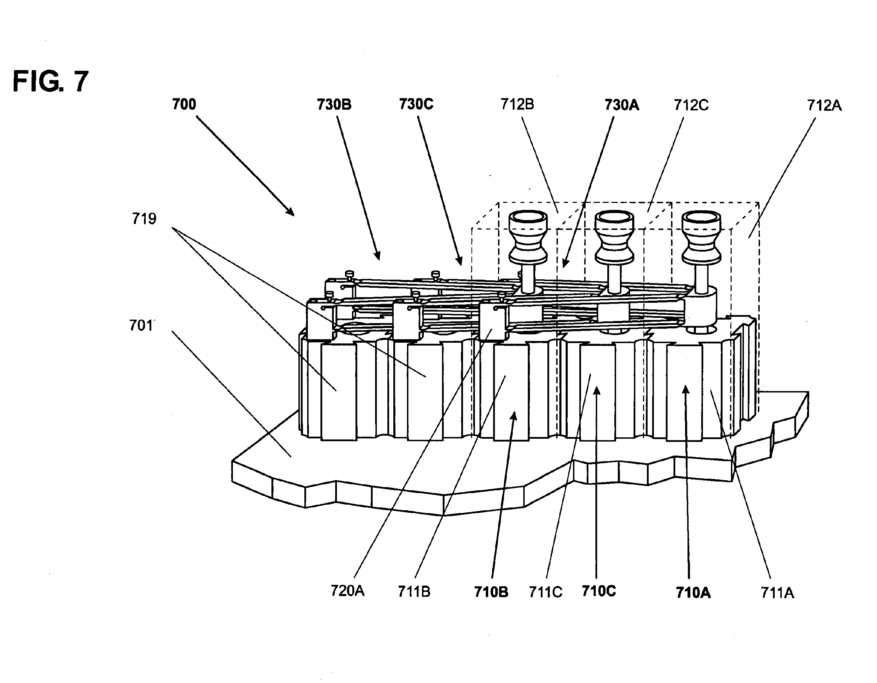

Figur 7 zeigt die perspektivische Darstellung einer erfindungsgemässen Vorrichtung zum Wiegen gleichgearteter Wägegüter 700 die aus drei Wägemodulen 710A, 710B, 710C mit ihren Wägezellen 711A, 711B, 711C und zwei Wägezellen-Leergehäusen 719 besteht, welche durch eine Aufnahmestruktur 701 miteinander starr verbunden sind. Der Aufbau entspricht im Wesentlichen demjenigen von Figur 2, die Bauräume 712A, 712B, 712C sind ebenfalls dargestellt. Jedoch ist zwischen der ersten Wägezelle 711A und der zweiten Wägezelle 711B die dritte Wägezelle 711C angeordnet, so dass die Parallelführung 730A des ersten Wägemoduls 710A den Bauraum 712C der dritten Wägezelle 711C durchdringt und somit die Wägezelle 711C überspannt. Der Fixbereich 720A der Parallelführung 730A des ersten Wägemoduls 710A ist im Bauraum 712B der Wägezelle 711B angeordnet und über die Wägezelle 711B mit der Aufnahmestruktur 701 starr verbunden. Dem gegenüber sind die Fixbereiche der Parallelführungen 730B, 730C über die den Wägemodulen 710A, 710B, 710C vorgelagerten Wägezellen-Leergehäuse 719 mit der Aufnahmestruktur 701 starr verbunden.

Selbstverständlich ist diese Anordnung nicht auf drei Wägemodule 710A, 710B, 710C beschränkt. Es können beliebig viele Wägemodule in einer flächigen Anordnung in der dargestellten Weise hinter- und nebeneinander angeordnet werden.

### Bezugszeichenliste

- 100, 200, 300, 400, 500, 600, 700: Vorrichtung zum Wiegen gleichgearteter Wägegüter
- 101, 201, 301, 401, 501, 605, 606, 701: Aufnahmestruktur
- 110A-B,210A-C, 310A-B, 410A-F, 510A-F,610A-C, 610X-Z, 710A-C: Wägemodul
- 111A-B, 211A-B, 311A-B, 411A, 511A-B, 711A-C: Wägezelle
- 112A-B, 312A-B, 712A-C: Bauraum
- 113: Gehäuseboden
- 115: Schraube
- 118A-B, 218, 218C: Befestigungsbereich
- 120A: Zwischenstück
- 121A-B, 421, 521: Abstandstück
- 130A-B, 230A-C, 330A-B,: Parallelführung
- 430A-B, 730A-C 131A, 231A, 331A, 431A-B: oberer Parallellenker
- 132A, 332A, 432A-B: oberer bew. Parallelschenkel
- 133A, 333A-B: oberer Fixbereich
- 433, 533: oberer Fixbereichverbund
- 134, 234, 334, 434: Dünnstellenbiegelager
- 135A, 235A: Justiervorrichtung
- 136A, 236A: Freistellung
- 138A, 438A: Distanzstück
- 141A, 241A, 341A, 441A-B: unterer Parallellenker
- 142A, 342A, 442A-B: unterer bew. Parallelschenkel
- 143A, 343A-B: unterer Fixbereich
- 443, 543: unterer Fixbereichverbund
- 150A-B, 250A-C, 350A-B, 450A, 550A-B, 650A-C, 560X-Y: Lastaufnehmer
- 160A, 260A, 360A, 460A-B, 560A-F, 660A-C, 660X-Z: Kraftübertragungsgestänge
- 190, 390: Befestigungsmittel
- 216: Linearführungsleiste
- 217: Linearführungsnut
- 219, 619, 719: Wägezellen- Leergehäuse
- 220A-B, 720A: Fixbereich
- 232A: beweglicher Parallelschenkel
- 407, 507, 607: Stütze
- 601: obere Ebene
- 602: untere Ebene
- 608: Vorlastkompensationsgewicht
- 614: Längsnute
- 616: Kanal
- 617: Eckbereich

## Patentansprüche (Patentansprüche für folgende(n) Vertragsstaat(en): CH, DE, FR, GB, LI)

1. Vorrichtung zum Wiegen gleichgearteter Wägegüter (100) mit mindestens einem ersten Wägemodul (110A) und einem zweiten Wägemodul (110B), wobei jedes Wägemodul (110A) eine Parallelführung (130A), einen Lastaufnehmer (150A) und eine mit diesem Lastaufnehmer (150A) durch ein Kraftübertragungsgestänge (160A) verbundene Wägezelle (111A) aufweist, die in einem Bauraum (112A) angeordnet ist, dessen Ausdehnung in der Ebene orthogonal zur Lastrichtung durch die Bauräume (112B) benachbarter Wägezellen (111B) begrenzt ist, wobei die Parallelführung (130A) mindestens einen mit dem Kraftübertragungsgestänge (160A) des zugeordneten Wägemoduls (110A) verbundenen, beweglichen Parallelschenkel (132A, 138A, 142A), mindestens einen oberen Parallellenker (131A), mindestens einen unteren Parallellenker (141A) und mindestens einen Fixbereich (133A, 120A, 121A, 143A) aufweist, **dadurch gekennzeichnet, dass** der mindestens eine Fixbereich (133A, 120A, 121A, 143A) des ersten Wägemoduls (110A) ausschliesslich im Bauraum (112B) der Wägezelle (111B) des zweiten Wägemoduls (110B) angeordnet ist.

2. Vorrichtung nach Anspruch 1, **dadurch gekennzeichnet, dass** die Ausdehnung des Bauraums (112A, 112B) in Lastrichtung durch angrenzende Systeme, bei auf mehreren Ebenen (601,602) angeordneten Wägemodulen (610A, 610X) durch die angrenzende Ebene (601, 602) der Vorrichtung oder durch die Gehäusewand (113) der Vorrichtung begrenzt ist

3. Vorrichtung nach Anspruch 1 oder 2, **dadurch gekennzeichnet, dass** zwischen dem ersten Wägemodul (710A) und dem zweiten Wägemodul (710B) mindestens ein
**(für CH, DE, FR, GB und LI)** drittes Wägemodul (710C) angeordnet ist, wobei die Parallelführung (730A) des ersten Wägemoduls (710A) den Bauraum (712C) des dritten Wägemoduls (710C) durchdringt.

4. Vorrichtung nach Anspruch 1 bis 3, **dadurch gekennzeichnet, dass** die Wägemodule (110A, 110B) direkt miteinander starr verbunden oder indirekt über eine Aufnahmestruktur (101) miteinander starr verbundenen sind.

5. Vorrichtung nach einem der Ansprüche 1 bis 4, **dadurch gekennzeichnet, dass** die zwischen dem mindestens einen beweglichen Parallelschenkel (132A, 138A, 142A), den Parallellenkern (131A, 141A) und dem mindestens einen Fixbereich (133A, 120A, 121A, 143A) ausgebildeten Verbindungsstellen der Parallelführung (130A, 130B) mindestens je ein Dünnstellenbiegelager (134) aufweisen.

6. Vorrichtung nach einem der Ansprüche 1 bis 5, **dadurch gekennzeichnet, dass** der mindestens eine obere Parallellenker (331A) und der mindestens eine untere Parallellenker (341A) einer Parallelführung (330A) in drei Dimensionen parallel zueinander angeordnet sind.

7. Vorrichtung nach einem der Ansprüche 1 bis 5, **dadurch gekennzeichnet, dass** je zwei obere Parallellenker (131A) und je zwei untere Parallellenker (141A) einer Parallelführung (130A) im Sinne einer V- Anordnung gegen den mindestens einen beweglichen Parallelschenkel (132A, 138A, 142A) hin zusammenlaufend angeordnet sind.

8. Vorrichtung nach einem der Ansprüche 1 bis 7, **dadurch gekennzeichnet, dass** mindestens zwei Verbindungsstellen zwischen dem mindestens einen oberen Parallellenker (131A) und dem mindestens einen Fixbereich (133A, 120A, 121A, 143A) und/oder dem mindestens einen unteren Parallellenker (141A) und dem mindestens einen Fixbereich (133A, 120A, 121A, 143A) einer Parallelführung (130A) mit je einer Justiervorrichtung (135A) zur Justierung des Wägemoduls (110A) auf Ecklastfreiheit versehen sind.

9. Vorrichtung nach einem der Ansprüche 1 bis 8, **dadurch gekennzeichnet, dass** jede Parallelführung (130A) aus mehreren, miteinander verbundenen Einzelteilen besteht.

10. Vorrichtung nach einem der Ansprüche 1 bis 8, **dadurch gekennzeichnet, dass** jede Parallelführung (230A) aus einem Materialblock herausgearbeitet ist, wobei der mindestens eine bewegliche Parallelschenkel (232A), die Parallellenker (231A, 241A), der mindestens eine Fixbereich (220A) und die Dünstellenbiegelager (234) integrierter Bestandteil des Materialblocks sind.

11. Vorrichtung nach einem der Ansprüche 1 bis 10, **dadurch gekennzeichnet, dass** die oberen Parallellenker (331A) einer Parallelführung (330A) zwischen dem zugeordneten Lastaufnehmer (350A) und der zugeordneten Wägezelle (311A) mit dem Kraftübertragungsgestänge (360A) verbunden sind und die unteren Parallellenker (341A) dieser Parallelführung (330A) auf der dem Lastaufnehmer (350A) abgewandten Seite der zugeordneten Wägezelle (311A) mit dem in Lastrichtung über die Wägezelle (311A) hinaus verlängerten Kraftübertragungsgestänge (360A) verbunden sind.

12. Vorrichtung nach einem der Ansprüche 1 bis 10, **dadurch gekennzeichnet, dass** mehrere oder alle oberen Parallellenker (431A, 431B) zusammen in einer oder mehreren einen oberen Fixbereichverbund (433) für die oberen Parallellenker (431A, 431B) bildenden Platten und mehrere oder alle unteren Parallellenker (441A, 441B) mit einer oder mehreren einen unteren Fixbereichverbund (443) der unteren Parallellenker (441A, 441B) bildenden Platten verbunden sind, wobei der obere Fixbereichverbund (433) und der untere Fixbereichverbund (443) durch voneinander beabstandet starr verbunden und zwischen den Lastaufnehmern (450A) und den Wägezellen (411A) angeordnet sind.

13. Vorrichtung nach Anspruch 11, **dadurch gekennzeichnet, dass** mehrere oder alle oberen Parallellenker zusammen in einer oder mehreren einen oberen Fixbereichverbund (533) für die oberen Parallellenker bildenden Platten und mehrere oder alle unteren Parallellenker mit einer oder mehreren einen unteren Fixbereichverbund (543) der unteren Parallellenker bildenden Platten verbunden sind, wobei der obere Fixbereichverbund (533) zwischen den Lastaufnehmern (550A) und Wägezellen (511A) mit den zugeordneten Kraftübertragungsgestängen (560A) verbunden ist und der auf der den Lastaufnehmern (550A) abgewandten Seite der Wägezellen (511A) angeordnete untere Fixbereichverbund (543) mit den in Lastrichtung über die Wägezellen (511A) hinaus verlängerten zugeordneten Kraftübertragungsgestängen (560A) verbunden ist.

14. Vorrichtung nach Anspruch 12 oder 13 **dadurch gekennzeichnet, dass** die gesamten Parallelführungen (430A, 430B), die oberen Parallellenker (431A) oder/und die unteren Parallellenker (441A) integrierter Bestandteil eines Materialblocks sind, wobei jede Parallelführung (430A, 430B), jeder obere Parallellenker (431A) mit zugehörenden Dünnstellenbiegelagern (434) und oberem beweglichen Parallelschenkel (432A) oder/und jeder untere Parallellenker (441A) mit zugehörenden Dünnstellenbiegelagern (432A) und unterem beweglichen Parallelschenkel (442A) durch die Platte senkrecht zu ihrer ausgedehnten Ebene und/oder orthogonal durchtrennende materialfreie Bereiche gebildet ist.

15. Vorrichtung nach einem der Ansprüche 1 bis 14, **dadurch gekennzeichnet, dass** die Wägemodule (610A, 610B, 610C, 610X, 610Y, 610Z) in mindestens einer oberen Ebene (601) und in einer unteren Ebene (602) übereinander angeordnet sind, in welchen die Wägemodule (610A, 610B, 610C, 610X, 610Y, 610Z) jeweils eine Reihen- und/oder Flächenanordnung bilden.

16. Vorrichtung nach Anspruch 15, **dadurch gekennzeichnet, dass** die Wägemodule (610A, 610B, 610C) der oberen Ebene (601) gegenüber den Wägemodulen (610X, 610Y, 610Z) der unteren Ebene (602) versetzt angeordnet sind.

## Patentansprüche (Patentansprüche für folgende(n) Vertragsstaat(en): AT, BE, DK, ES, GR, IT, LU, MC, NL, SE)

1. Vorrichtung zum Wiegen gleichgearteter Wägegüter (100) mit mindestens einem ersten Wägemodul (110A) und einem zweiten Wägemodul (110B), wobei jedes Wägemodul (110A) eine Parallelführung (130A), einen Lastaufnehmer (150A) und eine mit diesem Lastaufnehmer (150A) durch ein Kraftübertragungsgestänge (160A) verbundene Wägezelle (111A) aufweist, die in einem Bauraum (112A) angeordnet ist, dessen Ausdehnung in der Ebene orthogonal zur Lastrichtung durch die Bauräume (112B) benachbarter Wägezellen (111B) begrenzt ist, wobei die Parallelführung (130A) mindestens einen mit dem Kraftübertragungsgestänge (160A) des zugeordneten Wägemoduls (110A) verbundenen, beweglichen Parallelschenkel (132A, 138A, 142A), mindestens einen oberen Parallellenker (131A), mindestens einen unteren Parallellenker (141A) und mindestens einen Fixbereich (133A, 120A, 121A, 143A) aufweist, **dadurch gekennzeichnet, dass** der mindestens eine Fixbereich (133A, 120A, 121A, 143A) des ersten Wägemoduls (110A) im Bauraum (112B) der Wägezelle (111B) des zweiten Wägemoduls (110B) angeordnet ist.

2. Vorrichtung nach Anspruch 1, **dadurch gekennzeichnet, dass** die Ausdehnung des Bauraums (112A, 112B) in Lastrichtung durch angrenzende Systeme, bei auf mehreren Ebenen (601,602) angeordneten Wägemodulen (610A, 610X) durch die angrenzende Ebene (601, 602) der Vorrichtung oder durch die Gehäusewand (113) der Vorrichtung begrenzt ist

3. Vorrichtung nach Anspruch 1 oder 2, **dadurch gekennzeichnet, dass** zwischen dem ersten Wägemodul (710A) und dem zweiten Wägemodul (710B) mindestens ein drittes Wägemodul (710C) angeordnet ist, wobei die Parallelführung (730A) des ersten Wägemoduls (710A) den Bauraum (712C) des dritten Wägemoduls (710C) durchdringt.

4. Vorrichtung nach Anspruch 1 bis 3, **dadurch gekennzeichnet, dass** die Wägemodule (110A, 110B) direkt miteinander starr verbunden oder indirekt über eine Aufnahmestruktur (101) miteinander starr verbundenen sind.

5. Vorrichtung nach einem der Ansprüche 1 bis 4, **dadurch gekennzeichnet, dass** die zwischen dem mindestens einen beweglichen Parallelschenkel (132A, 138A, 142A), den Parallellenkern (131A, 141A) und dem mindestens einen Fixbereich (133A, 120A, 121A, 143A) ausgebildeten Verbindungsstellen der Parallelführung (130A, 130B) mindestens je ein Dünnstellenbiegelager (134) aufweisen.

6. Vorrichtung nach einem der Ansprüche 1 bis 5, **dadurch gekennzeichnet, dass** der mindestens eine obere Parallellenker (331A) und der mindestens eine untere Parallellenker (341A) einer Parallelführung (330A) in drei Dimensionen parallel zueinander angeordnet sind.

7. Vorrichtung nach einem der Ansprüche 1 bis 5, **dadurch gekennzeichnet, dass** je zwei obere Parallellenker (131A) und je zwei untere Parallellenker (141A) einer Parallelführung (130A) im Sinne einer V- Anordnung gegen den mindestens einen beweglichen Parallelschenkel (132A, 138A, 142A) hin zusammenlaufend angeordnet sind.

8. Vorrichtung nach einem der Ansprüche 1 bis 7, **dadurch gekennzeichnet, dass** mindestens zwei Verbindungsstellen zwischen dem mindestens einen oberen Parallellenker (131A) und dem mindestens einen Fixbereich (133A, 120A, 121A, 143A) und/oder dem mindestens einen unteren Parallellenker (141A) und dem mindestens einen Fixbereich (133A, 120A, 121A, 143A) einer Parallelführung (130A) mit je einer Justiervorrichtung (135A) zur Justierung des Wägemoduls (110A) auf Ecklastfreiheit versehen sind.

9. Vorrichtung nach einem der Ansprüche 1 bis 8, **dadurch gekennzeichnet, dass** jede Parallelführung (130A) aus mehreren, miteinander verbundenen Einzelteilen besteht.

10. Vorrichtung nach einem der Ansprüche 1 bis 8, **dadurch gekennzeichnet, dass** jede Parallelführung (230A) aus einem Materialblock herausgearbeitet ist, wobei der mindestens eine bewegliche Parallelschenkel (232A), die Parallellenker (231A, 241A), der mindestens eine Fixbereich (220A) und die Dünstellenbiegelager (234) integrierter Bestandteil des Materialblocks sind.

11. Vorrichtung nach einem der Ansprüche 1 bis 10, **dadurch gekennzeichnet, dass** die oberen Parallellenker (331A) einer Parallelführung (330A) zwischen dem zugeordneten Lastaufnehmer (350A) und der zugeordneten Wägezelle (311A) mit dem Kraftübertragungsgestänge (360A) verbunden sind und die unteren Parallellenker (341A) dieser Parallelführung (330A) auf der dem Lastaufnehmer (350A) abgewandten Seite der zugeordneten Wägezelle (311A) mit dem in Lastrichtung über die Wägezelle (311A) hinaus verlängerten Kraftübertragungsgestänge (360A) verbunden sind.

12. Vorrichtung nach einem der Ansprüche 1 bis 10, **dadurch gekennzeichnet, dass** mehrere oder alle oberen Parallellenker (431A, 431B) zusammen in einer oder mehreren einen oberen Fixbereichverbund (433) für die oberen Parallellenker (431A, 431B) bildenden Platten und mehrere oder alle unteren Parallellenker (441A, 441B) mit einer oder mehreren einen unteren Fixbereichverbund (443) der unteren Parallellenker (441A, 441B) bildenden Platten verbunden sind, wobei der obere Fixbereichverbund (433) und der untere Fixbereichverbund (443) durch voneinander beabstandet starr verbunden und zwischen den Lastaufnehmern (450A) und den Wägezellen (411A) angeordnet sind.

13. Vorrichtung nach Anspruch 11, **dadurch gekennzeichnet, dass** mehrere oder alle oberen Parallellenker zusammen in einer oder mehreren einen oberen Fixbereichverbund (533) für die oberen Parallellenker bildenden Platten und mehrere oder alle unteren Parallellenker mit einer oder mehreren einen unteren Fixbereichverbund (543) der unteren Parallellenker bildenden Platten verbunden sind, wobei der obere Fixbereichverbund (533) zwischen den Lastaufnehmern (550A) und Wägezellen (511A) mit den zugeordneten Kraftübertragungsgestängen (560A) verbunden ist und der auf der den Lastaufnehmern (550A) abgewandten Seite der Wägezellen (511A) angeordnete untere Fixbereichverbund (543) mit den in Lastrichtung über die Wägezellen (511A) hinaus verlängerten zugeordneten Kraftübertragungsgestängen (560A) verbunden ist.

14. Vorrichtung nach Anspruch 12 oder 13 **dadurch gekennzeichnet, dass** die gesamten Parallelführungen (430A, 430B), die oberen Parallellenker (431A) oder/und die unteren Parallellenker (441A) integrierter Bestandteil eines Materialblocks sind, wobei jede Parallelführung (430A, 430B), jeder obere Parallellenker (431A) mit zugehörenden Dünnstellenbiegelagern (434) und oberem beweglichen Parallelschenkel (432A) oder/und jeder untere Parallellenker (441A) mit zugehörenden Dünnstellenbiegelagern (432A) und unterem beweglichen Parallelschenkel (442A) durch die Platte senkrecht zu ihrer ausgedehnten Ebene und/oder orthogonal durchtrennende materialfreie Bereiche gebildet ist.

15. Vorrichtung nach einem der Ansprüche 1 bis 14, **dadurch gekennzeichnet, dass** die Wägemodule (610A, 610B, 610C, 610X, 610Y, 610Z) in mindestens einer oberen Ebene (601) und in einer unteren Ebene (602) übereinander angeordnet sind, in welchen die Wägemodule (610A, 610B, 610C, 610X, 610Y, 610Z) jeweils eine Reihen- und/oder Flächenanordnung bilden.

16. Vorrichtung nach Anspruch 15, **dadurch gekennzeichnet, dass** die Wägemodule (610A, 610B, 610C) der oberen Ebene (601) gegenüber den Wägemodulen (610X, 610Y, 610Z) der unteren Ebene (602) versetzt angeordnet sind.

## Claims (Claims for the following Contracting State(s): CH, DE, FR, GB, LI)

1. A device for the weighing of homogeneous goods (100) with at least a first weighing module (110A) and a second weighing module (110B), wherein
each weighing module (110A) has a parallel guide (130A), a load receptor (150A) and a weighing cell (111A) connected with this load receptor (150A) by means of a force transfer rod (160A), which is arranged in an installation space (112A), whose extent in the plane orthogonal to the load direction is limited by the installation spaces (112B) of adjacent weighing cells (111B), wherein
the parallel guide (130A) has at least one moving parallel arm (132A, 138A, 142A), connected with the force transfer rod (160A) of the associated weighing module (110A), at least one upper parallel link (131A), at least one lower parallel link (141A), and at least one fixed region (133A, 120A, 121A, 143A),
**characterised in that** the at least one fixed region (133A, 120A, 121A, 143A) of the first weighing module (110A) is arranged exclusively in the installation space (112B) of the weighing cell (111B) of the second weighing module (110B).

2. The device in accordance with Claim 1,
**characterised in that** the extent of the installation space (112A, 112B) is limited in the load direction by adjacent systems, in the case of weighing modules (610A, 610X) arranged on a plurality of planes (601, 602) by the adjacent plane (601, 602) of the device, or by the housing wall (113) of the device.

3. The device in accordance with Claim 1 or 2,
**characterised in that** at least a third weighing module (710C) is arranged between the first weighing module (710A) and the second weighing module (710B), wherein
the parallel guide (730A) of the first weighing module (710A) penetrates the installation space (712C) of the third weighing module (710C).

4. The device in accordance with Claims 1 to 3,
**characterised in that** the weighing modules (110A, 110B) are rigidly connected with one another directly, or are rigidly connected with one another indirectly via a host structure (101).

5. The device in accordance with one of the Claims 1 to 4,
**characterised in that** the joints of the parallel guide (130A, 130B) designed between the at least one moving parallel arm (132A, 138A, 142A), the parallel links (131A, 141A) and the at least one fixed region (133A, 120A, 121A, 143A) have in each case at least one thin section flexural bearing (134).

6. The device in accordance with one of the Claims 1 to 5,
**characterised in that** the at least one upper parallel link (331A), and the at least one lower parallel link (341A) of a parallel guide (330A) are arranged parallel to one another in three dimensions.

7. The device in accordance with one of the Claims 1 to 5,
**characterised in that** each pair of upper parallel links (131A), and each pair of lower parallel links (141A) are arranged in terms of a V-arrangement converging towards the at least one moving parallel arm (132A, 138A, 142A).

8. The device in accordance with one of the Claims 1 to 7,
**characterised in that** at least two joints between the at least one upper parallel link (131A) and the at least one fixed region (133A, 120A, 121A, 143A), and/or between the at least one lower parallel link (141A) and the at least one fixed region (133A, 120A, 121A, 143A) of a parallel guide (130A) are provided in each case with an adjustment device (135A) for the purpose of adjusting the weighing module (110A) re corner load freedom.

9. The device in accordance with one of the Claims 1 to 8,
**characterised in that** each parallel guide (130A) consists of a plurality of individual parts connected with one another.

10. The device in accordance with one of the Claims 1 to 8,
**characterised in that** each parallel guide (230A) is machined out of a material block, wherein.
the at least one moving parallel arm (232A), the parallel links (231A, 241A), the at least one fixed region (220A) and the thin section flexural bearing (234) are integrated components of the material block.

11. The device in accordance with one of the Claims 1 to 10,
**characterised in that** the upper parallel links (331A) of a parallel guide (330A) are connected between the associated load receptor (350A) and the associated weighing cell (311A) with the force transfer rod (360A), and the lower parallel links (341A) of this parallel guide (330A) on the side of the associated weighing cell (311A) facing away from the load receptor (350A) are connected with the force transfer rod (360A) extended beyond the weighing cell (311A) in the load direction.

12. The device in accordance with one of the Claims 1 to 10,
**characterised in that** a plurality or all upper parallel links (431A, 431B) are connected together in one or a plurality of plates forming an upper fixed region composite (433) for the upper parallel links (431A, 431B), and a plurality or all lower parallel links (441A, 441B) are connected with one or a plurality of plates forming a lower fixed region composite (443) of the lower parallel links (441A, 441B), wherein
the upper fixed region composite (433) and the lower fixed region composite (443) are rigidly connected, spaced apart from one another, and arranged between the load receptors (450A) and the weighing cells (411a).

13. The device in accordance with Claim 11,
**characterised in that** a plurality or all upper parallel links are connected together in one or a plurality of plates forming an upper fixed region composite (533) for the upper parallel links, and a plurality or all lower parallel links are connected with one or a plurality of plates forming a lower fixed region composite (543) of the lower parallel links, wherein
the upper fixed region composite (533) is connected between the load receptors (550A) and weighing cells (511A) with the associated force transfer rods (560A), and the lower fixed region composite (543) arranged on the side of the weighing cells (511a) facing away from the load receptors (550A) is connected with the associated force transfer rods (560A) extended beyond the weighing cells (511A) in the load direction.

14. The device in accordance with Claim 12 or 13,
**characterised in that** all the parallel guides (430A, 430B), the upper parallel links (431A), or/and the lower parallel links (441A) are integrated components of a material block, wherein.
each parallel guide (430A, 430B), each upper parallel link (431A) with related thin section flexural bearings (434) and upper moving parallel arm (432A) or/and each lower parallel link (441A) with related thin section flexural bearings (432A) and lower moving parallel arm (442A) is formed by means of material-free regions, cutting through the plate at right-angles and/or orthogonally to its extended plane.

15. The device in accordance with one of the Claims 1 to 14,
**characterised in that** the weighing modules (610A, 610B, 610C, 610X, 610Y, 610Z) in at least one upper plane (601) and in a lower plane (602) are arranged one above another, in which the weighing modules (610A, 610B, 610C, 610X, 610Y, 610Z) in each case form a row and/or an area arrangement.

16. The device in accordance with Claim 15,
**characterised in that** the weighing modules (610A, 610B, 610C) of the upper plane (601) are arranged displaced relative to the weighing modules (610X, 610Y, 610Z) of the lower plane (602).

## Claims (Claims for the following Contracting State(s): AT, BE, DK, ES, GR, IT, LU MC, NL, SE)

1. A device for the weighing of homogeneous goods (100) with at least a first weighing module (110A) and a second weighing module (110B), wherein
each weighing module (110A) has a parallel guide (130A), a load receiver (150A) and a weighing cell (111A) connected with this load receiver (150A) by means of a force transfer rod (160A), which is arranged in an installation space (112A), whose extent in the plane orthogonal to the load direction is limited by the installation spaces (112B) of adjacent weighing cells (111B), wherein
the parallel guide (130A) has at least one moving parallel arm (132A, 138A, 142A), connected with the force transfer rod (160A) of the associated weighing module (110A), at least one upper parallel link (131A), at least one lower parallel link (141A), and at least one fixed region (133A, 120A, 121A, 143A),
**characterised in that** the at least one fixed region (133A, 120A, 121A, 143A) of the first weighing module (110A) is arranged in the installation space (112B) of the weighing cell (111B) of the second weighing module (110B).

2. The device in accordance with Claim 1,
**characterised in that** the extent of the installation space (112A, 112B) is limited in the load direction by adjacent systems, in the case of weighing modules (610A, 610X) arranged on a plurality of planes (601, 602) by the adjacent plane (601, 602) of the device, or by the housing wall (113) of the device.

3. The device in accordance with Claim 1 or 2,
**characterised in that** at least a third weighing module (710C) is arranged between the first weighing module (710A) and the second weighing module (710B), wherein
the parallel guide (730A) of the first weighing module (710A) penetrates the installation space (712C) of the third weighing module (710C).

4. The device in accordance with Claims 1 to 3,
**characterised in that** the weighing modules (110A, 110B) are rigidly connected with one another directly, or are rigidly connected with one another indirectly via a host structure (101).

5. The device in accordance with one of the Claims 1 to 4,
**characterised in that** the joints of the parallel guide (130A, 130B) designed between the at least one moving parallel arm (132A, 138A, 142A), the parallel links (131A, 141A) and the at least one fixed region (133A, 120A, 121A, 143A) have in each case at least one thin section flexural bearing (134).

6. The device in accordance with one of the Claims 1 to 5,
**characterised in that** the at least one upper parallel link (331A), and the at least one lower parallel link (341A) of a parallel guide (330A) are arranged parallel to one another in three dimensions.

7. The device in accordance with one of the Claims 1 to 5,
**characterised in that** each pair of upper parallel links (131A), and each pair of lower parallel links (141A) are arranged in terms of a V-arrangement converging towards the at least one moving parallel arm (132A, 138A, 142A).

8. The device in accordance with one of the Claims 1 to 7,
**characterised in that** at least two joints between the at least one upper parallel link (131A) and the at least one fixed region (133A, 120A, 121A, 143A) and/or between the at least one lower parallel link (141A) and the at least one fixed region (133A, 120A, 121A, 143A) of a parallel guide (130A) are provided in each case with an adjustment device (135A) for the purpose of adjusting the weighing module (110A) re corner load freedom.

9. The device in accordance with one of the Claims 1 to 8,
**characterised in that** each parallel guide (130A) consists of a plurality of individual parts connected with one another.

10. The device in accordance with one of the Claims 1 to 8,
**characterised in that** each parallel guide (230A) is machined out of a material block, wherein.
the at least one moving parallel arm (232A), the parallel links (231A, 241A), the at least one fixed region (220A) and the thin section flexural bearing (234) are integrated components of the material block.

11. The device in accordance with one of the Claims 1 to 10,
**characterised in that** the upper parallel links (331A) of a parallel guide (330A) are connected between the associated load receptor (350A) and the associated weighing cell (311A) with the force transfer rod (360A), and the lower parallel links (341A) of this parallel guide (330A) on the side of the associated weighing cell (311A) facing away from the load receptor (350A) are connected with the force transfer rod (360A) extended beyond the weighing cell (311A) in the load direction.

12. The device in accordance with one of the Claims 1 to 10,
**characterised in that** a plurality or all upper parallel links (431A, 431B) are connected together in one or a plurality of plates forming an upper fixed region composite (433) for the upper parallel links (431A, 431B), and a plurality or all lower parallel links (441A, 441B) are connected with one or a plurality of plates forming a lower fixed region composite (443) of the lower parallel links (441A, 441B), wherein
the upper fixed region composite (433) and the lower fixed region composite (443) are rigidly connected, spaced apart from one another, and arranged between the load receptors (450A) and the weighing cells (411a).

13. The device in accordance with Claim 11,
**characterised in that** a plurality or all upper parallel links are connected together in one or a plurality of plates forming an upper fixed region composite (533) for the upper parallel links, and a plurality or all lower parallel links are connected with one or a plurality of plates forming a lower fixed region composite (543) of the lower parallel links, wherein
the upper fixed region composite (533) is connected between the load receptors (550A) and weighing cells (511A) with the associated force transfer rods (560A), and the lower fixed region composite (543) arranged on the side of the weighing cells (511a) facing away from the load receptors (550A) is connected with the associated force transfer rods (560A) extended beyond the weighing cells (511A) in the load direction.

14. The device in accordance with Claim 12 or 13,
**characterised in that** all the parallel guides (430A, 430B), the upper parallel links (431A), or/and the lower parallel links (441A) are integrated components of a material block, wherein.
each parallel guide (430A, 430B), each upper parallel link (431A) with related thin section flexural bearings (434) and upper moving parallel arm (432A) or/and each lower parallel link (441A) with related thin section flexural bearings (432A) and lower moving parallel arm (442A) is formed by means of material-free regions, cutting through the plate at right-angles and/or orthogonally to its extended plane.

15. The device in accordance with one of the Claims 1 to 14,
**characterised in that** the weighing modules (610A, 610B, 610C, 610X, 610Y, 610Z) in at least one upper plane (601) and in a lower plane (602) are arranged one above another, in which the weighing modules (610A, 610B, 610C, 610X, 610Y, 610Z)in each case form a row and/or an area arrangement.

16. The device in accordance with Claim 15,
**characterised in that** the weighing modules (610A, 610B, 610C) of the upper plane (601) are arranged displaced relative to the weighing modules (610X, 610Y, 610Z) of the lower plane (602).

## Revendications (Revendications pour l'(les) Etat(s) contractant(s) suivant(s): CH, DE, FR, GB, LI)

1. Dispositif destiné à peser des marchandises à peser (100) de même type comprenant au moins un premier module de pesage (110A) et un second module de pesage (110B), chaque module de pesage (110A) présentant un guide parallèle (130A), un récepteur de charge (150A) et une cellule de pesage (111A) reliée à ce récepteur de charge (150A) par une tringle de transmission de force (160A), laquelle cellule est disposée dans un espace de construction (112A), dont l'extension est limitée dans le plan perpendiculairement à la direction de la charge par les espaces de construction (112B) de cellules de pesage (111B) voisines, le guide parallèle (130A) présentant au moins une branche parallèle (132A, 138A, 142A) mobile, reliée à la tringle de transmission de force (160A) du module de pesage (110A) attribué, au moins un guide parallèle (131A) supérieur, au moins un guide parallèle (141A) inférieur et au moins une zone fixe (133A, 120A, 121A, 143A), **caractérisé en ce que** la au moins une zone fixe (133A, 120A, 121A, 143A) du premier module de pesage (110A) est disposée uniquement dans l'espace de construction (112B) de la cellule de pesage (111B) du second module de pesage (110B).

2. Dispositif selon la revendication 1, **caractérisé en ce que** l'extension de l'espace de construction (112A, 112B) est limitée dans le sens de charge par des systèmes contigus, dans le cas de modules de pesage (610A, 610X) disposés sur plusieurs plans (601, 602) par le plan (601, 602) adjacent du dispositif ou par la paroi de boîtier (113) du dispositif.

3. Dispositif selon la revendication 1 ou 2, **caractérisé en ce qu'**au moins un troisième module de pesage (710C) est disposé entre le premier module de pesage (710A) et le second module de pesage (710B), le guide parallèle (730A) du premier module de pesage (710A) traversant l'espace de construction (712C) du troisième module de pesage (710C).

4. Dispositif selon les revendications 1 à 3, **caractérisé en ce que** les modules de pesage (110A, 110B) sont reliés directement les uns aux autres de façon fixe ou sont reliés de façon fixe les uns aux autres indirectement par une structure de logement (101).

5. Dispositif selon l'une des revendications 1 à 4, **caractérisé en ce que** les points de liaison, conçus, entre la au moins une branche parallèle (132A, 138A, 142A) mobile, les guides parallèles (131A, 141A) et la au moins une zone fixe (133A, 120A, 121A, 143A), du guide parallèle (130A, 130B) présentent chacun au moins un palier de flexion à emplacement mince (134).

6. Dispositif selon l'une des revendications 1 à 5, **caractérisé en ce que** le au moins un guide parallèle (331A) supérieur et le au moins un guide parallèle (341A) inférieur d'un guide parallèle (330A) sont disposés en trois dimensions parallèlement l'un par rapport à l'autre.

7. Dispositif selon l'une des revendications 1 à 5, **caractérisé en ce que**, à chaque fois, deux guides parallèles (131A) supérieurs et à chaque fois deux guides parallèles (141A) inférieurs d'un guide parallèle (130A) sont disposés dans le sens d'un agencement en V en convergeant en direction du au moins une branche parallèle (132A, 138A, 142A) mobile.

8. Dispositif selon l'une des revendications 1 à 7, **caractérisé en ce qu'**au moins deux points de liaison entre la au moins un guide parallèle supérieur (131A) et la au moins une zone fixe (133A, 120A, 121A, 143A) et/ou le au moins un guide parallèle (141A) inférieur et la au moins une zone fixe (133A, 120A, 121A, 143A) d'un guide parallèle (130A) sont dotés chacun d'un dispositif d'ajustage (135A) pour l'ajustage du module de pesage (110A) au niveau de la liberté de la charge de référence.

9. Dispositif selon l'une des revendications 1 à 8, **caractérisé en ce que** chaque guide parallèle (130A) est constitué de plusieurs parties individuelles reliées les unes aux autres.

10. Dispositif selon l'une des revendications 1 à 8, **caractérisé en ce que** chaque guide parallèle (230A) est travaillé à partir d'un bloc de matériau, la au moins une branche parallèle (232A) mobile, les guides parallèles (231A, 241A), la au moins une zone fixe (220A) et les paliers de flexion à emplacement mince (234) étant un composant intégré du bloc de matériau.

11. Dispositif selon l'une des revendications 1 à 10, **caractérisé en ce que** les guides parallèles (331A) supérieurs d'un guidage parallèle (330A) sont reliés à la tringle de transmission de force (360A) entre le récepteur de charge (350A) associé et la cellule de pesage (311A) associée et les guides parallèles (341A) inférieurs de ce guidage parallèle (330A) sont reliés sur le côté, opposé au récepteur de charge (350A), de la cellule de pesée (311A) associée à la tringle de transmission de force (360A) prolongée dans le sens de charge au-delà de la cellule de pesage (311A).

12. Dispositif selon l'une des revendications 1 à 10, **caractérisé en ce que** plusieurs ou tous les guides parallèles (431A, 431B) supérieurs sont reliés ensemble dans une ou plusieurs plaques formant un ensemble de zone fixe (433) supérieur pour les guides parallèles (431A, 431B) supérieurs et plusieurs ou tous les guides parallèles (441A, 441B) inférieurs sont reliés à une ou plusieurs plaques formant un ensemble de zone fixe (443) inférieur des guides parallèles (441A, 441B) inférieurs, l'ensemble de zone fixe (433) supérieur et l'ensemble de zone fixe (443) inférieur étant reliés de façon fixe à distance les uns des autres et étant disposés entre les récepteurs de charge (450A) et les cellules de pesage (411A).

13. Dispositif selon la revendication 11, **caractérisé en ce que** plusieurs ou tous les guides parallèles supérieurs sont reliés ensemble dans une ou plusieurs plaques formant un ensemble de zone fixe (533) supérieur pour les guides parallèles supérieurs et plusieurs ou tous les guides parallèles inférieurs sont reliés à une plaque ou plusieurs plaques formant un ensemble de zone fixe (543) inférieur des guides parallèles inférieurs, l'ensemble de zone fixe (533) supérieur étant relié entre les récepteurs de charge (550A) et les cellules de pesage (511A) aux tringles de transmission de force (560A) associées et l'ensemble de zone fixe (543) inférieur disposé sur le côté, opposé aux récepteurs de charge (550A), des cellules de pesage (511A) étant reliés aux tringles de transmission de force (560A) associées, prolongées dans le sens de charge au-delà des cellules de pesage (511A).

14. Dispositif selon la revendication 12 ou 13, **caractérisé en ce que** l'ensemble des guides parallèles (430A, 430B), les guides parallèles (431A) supérieurs et/ou les guides parallèles (441A) inférieurs sont un composant intégré d'un bloc de matériau, chaque guide parallèle (430A, 430B), chaque guide parallèle (431A) supérieur avec des paliers de flexion à emplacement mince (434) associés et une branche parallèle (432A) mobile supérieure et/ou chaque guide parallèle (441A) inférieur avec des paliers de flexion à emplacement mince (432A) associés et une branche parallèle (442A) mobile inférieure étant formé(s) par des zones sans matériau, séparant la plaque perpendiculairement à son plan étendu et/ou orthogonalement.

15. Dispositif selon l'une des revendications 1 à 14, **caractérisé en ce que** les modules de pesage (610A, 610B, 610C, 610X, 610Y, 610Z) sont disposés les uns au-dessus des autres dans au moins un plan (601) supérieur et dans un plan (602) inférieur, plans dans lesquels les modules de pesage (610A, 610B, 610C, 610X, 610Y, 610Z) forment à chaque fois un agencement en rangée et/ou en surface.

16. Dispositif selon la revendication 15, **caractérisé en ce que** les modules de pesage (610A, 610B, 610C) du plan (601) supérieur sont disposés de façon décalée par rapport aux modules de pesage (610X, 610Y, 610Z) du plan (602) inférieur.

## Revendications (Revendications pour l'(les) Etat(s) contractant(s) suivant(s): AT, BE, DK, ES, GR, IT, LU, MC, NL, SE)

1. Dispositif destiné à peser des marchandises à peser (100) de même type comprenant au moins un premier module de pesage (110A) et un second module de pesage (110B), chaque module de pesage (110A) présentant un guide parallèle (130A), un récepteur de charge (150A) et une cellule de pesage (111A) reliée à ce récepteur de charge (150A) par une tringle de transmission de force (160A), laquelle cellule est disposée dans un espace de construction (112A), dont l'extension est limitée dans le plan perpendiculairement à la direction de la charge par les espaces de construction (112B) de cellules de pesage (111B) voisines, le guide parallèle (130A) présentant au moins une branche parallèle (132A, 138A, 142A) mobile, reliée à la tringle de transmission de force (160A) du module de pesage (110A) attribué, au moins un guide parallèle (131A) supérieur, au moins un guide parallèle (141A) inférieur et au moins une zone fixe (133A, 120A, 121A, 143A), **caractérisé en ce que** la au moins une zone fixe (133A, 120A, 121A, 143A) du premier module de pesage (110A) est disposée dans l'espace de construction (112B) de la cellule de pesage (111B) du second module de pesage (110B).

2. Dispositif selon la revendication 1, **caractérisé en ce que** l'extension de l'espace de construction (112A, 112B) est limitée dans le sens de charge par des systèmes contigus, dans le cas de modules de pesage (610A, 610X) disposés sur plusieurs plans (601, 602) par le plan (601, 602) adjacent du dispositif ou par la paroi de boîtier (113) du dispositif.

3. Dispositif selon la revendication 1 ou 2, **caractérisé en ce qu'**au moins un troisième module de pesage (710C) est disposé entre le premier module de pesage (710A) et le second module de pesage (710B), le guide parallèle (730A) du premier module de pesage (710A) traversant l'espace de construction (712C) du troisième module de pesage (710C).

4. Dispositif selon les revendications 1 à 3, **caractérisé en ce que** les modules de pesage (110A, 110B) sont reliés directement les uns aux autres de façon fixe ou sont reliés de façon fixe les uns aux autres indirectement par une structure de logement (101).

5. Dispositif selon l'une des revendications 1 à 4, **caractérisé en ce que** les points de liaison, conçus, entre la au moins une branche parallèle (132A, 138A, 142A) mobile, les guides parallèles (131A, 141A) et la au moins une zone fixe (133A, 120A, 121A, 143A), du guide parallèle (130A, 130B) présentent chacun au moins un palier de flexion à emplacement mince (134).

6. Dispositif selon l'une des revendications 1 à 5, **caractérisé en ce que** le au moins un guide parallèle (331A) supérieur et le au moins un guide parallèle (341A) inférieur d'un guide parallèle (330A) sont disposés en trois dimensions parallèlement l'un par rapport à l'autre.

7. Dispositif selon l'une des revendications 1 à 5, **caractérisé en ce que**, à chaque fois, deux guides parallèles (131A) supérieurs et à chaque fois deux guides parallèles (141A) inférieurs d'un guide parallèle (130A) sont disposés dans le sens d'un agencement en V en convergeant en direction du au moins une branche parallèle (132A, 138A, 142A) mobile.

8. Dispositif selon l'une des revendications 1 à 7, **caractérisé en ce qu'**au moins deux points de liaison entre la au moins un guide parallèle supérieur (131A) et la au moins une zone fixe (133A, 120A, 121A, 143A) et/ou le au moins un guide parallèle (141A) inférieur et la au moins une zone fixe (133A, 120A, 121A, 143A) d'un guide parallèle (130A) sont dotés chacun d'un dispositif d'ajustage (135A) pour l'ajustage du module de pesage (110A) au niveau de la liberté de la charge de référence.

9. Dispositif selon l'une des revendications 1 à 8, **caractérisé en ce que** chaque guide parallèle (130A) est constitué de plusieurs parties individuelles reliées les unes aux autres.

10. Dispositif selon l'une des revendications 1 à 8, **caractérisé en ce que** chaque guide parallèle (230A) est travaillé à partir d'un bloc de matériau, la au moins une branche parallèle (232A) mobile, les guides parallèles (231A, 241A), la au moins une zone fixe (220A) et les paliers de flexion à emplacement mince (234) étant un composant intégré du bloc de matériau.

11. Dispositif selon l'une des revendications 1 à 10, **caractérisé en ce que** les guides parallèles (331A) supérieurs d'un guidage parallèle (330A) sont reliés à la tringle de transmission de force (360A) entre le récepteur de charge (350A) associé et la cellule de pesage (311A) associée et les guides parallèles (341A) inférieurs de ce guidage parallèle (330A) sont reliés sur le côté, opposé au récepteur de charge (350A), de la cellule de pesée (311A) associée à la tringle de transmission de force (360A) prolongée dans le sens de charge au-delà de la cellule de pesage (311A).

12. Dispositif selon l'une des revendications 1 à 10, **caractérisé en ce que** plusieurs ou tous les guides parallèles (431A, 431B) supérieurs sont reliés ensemble dans une ou plusieurs plaques formant un ensemble de zone fixe (433) supérieur pour les guides parallèles (431A, 431B) supérieurs et plusieurs ou tous les guides parallèles (441A, 441B) inférieurs sont reliés à une ou plusieurs plaques formant un ensemble de zone fixe (443) inférieur des guides parallèles (441A, 441B) inférieurs, l'ensemble de zone fixe (433) supérieur et l'ensemble de zone fixe (443) inférieur étant reliés de façon fixe à distance les uns des autres et étant disposés entre les récepteurs de charge (450A) et les cellules de pesage (411A).

13. Dispositif selon la revendication 11, **caractérisé en ce que** plusieurs ou tous les guides parallèles supérieurs sont reliés ensemble dans une ou plusieurs plaques formant un ensemble de zone fixe (533) supérieur pour les guides parallèles supérieurs et plusieurs ou tous les guides parallèles inférieurs sont reliés à une plaque ou plusieurs plaques formant un ensemble de zone fixe (543) inférieur des guides parallèles inférieurs, l'ensemble de zone fixe (533) supérieur étant relié entre les récepteurs de charge (550A) et les cellules de pesage (511A) aux tringles de transmission de force (560A) associées et l'ensemble de zone fixe (543) inférieur disposé sur le côté, opposé aux récepteurs de charge (550A), des cellules de pesage (511A) étant reliés aux tringles de transmission de force (560A) associées, prolongées dans le sens de charge au-delà des cellules de pesage (511A).

14. Dispositif selon la revendication 12 ou 13, **caractérisé en ce que** l'ensemble des guides parallèles (430A, 430B), les guides parallèles (431A) supérieurs et/ou les guides parallèles (441A) inférieurs sont un composant intégré d'un bloc de matériau, chaque guide parallèle (430A, 430B), chaque guide parallèle (431A) supérieur avec des paliers de flexion à emplacement mince (434) associés et une branche parallèle (432A) mobile supérieure et/ou chaque guide parallèle (441A) inférieur avec des paliers de flexion à emplacement mince (432A) associés et une branche parallèle (442A) mobile inférieure étant formé(s) par des zones sans matériau, séparant la plaque perpendiculairement à son plan étendu et/ou orthogonalement.

15. Dispositif selon l'une des revendications 1 à 14, **caractérisé en ce que** les modules de pesage (610A, 610B, 610C, 610X, 610Y, 610Z) sont disposés les uns au-dessus des autres dans au moins un plan (601) supérieur et dans un plan (602) inférieur, plans dans lesquels les modules de pesage (610A, 610B, 610C, 610X, 610Y, 610Z) forment à chaque fois un agencement en rangée et/ou en surface.

16. Dispositif selon la revendication 15, **caractérisé en ce que** les modules de pesage (610A, 610B, 610C) du plan (601) supérieur sont disposés de façon décalée par rapport aux modules de pesage (610X, 610Y, 610Z) du plan (602) inférieur.
